# EUROPEAN PATENT APPLICATION

(11) **EP 4 329 393 A1**
(43) Date of publication of application: **28.02.2024**
(21) Application number: 21943446.1
(22) Date of filing: 31.05.2021
(51) Int. Cl.: H04W 64/00

(54) **TAG DEVICE POSITIONING METHOD AND SYSTEM, AND RELATED APPARATUS**

(71) Applicant: Huawei Technologies Co., Ltd., Longgang Shenzhen, Guangdong 518129 (CN)
(72) Inventor: ZHU, Haoren, Shenzhen, Guangdong 518129 (CN); ZHU, Hualin, Shenzhen, Guangdong 518129 (CN); XU, Yishan, Shenzhen, Guangdong 518129 (CN)
(74) Representative: MERH-IP Matias Erny Reichl Hoffmann Patentanwälte PartG mbB
(86) International application number: PCT/CN2021/097461
(87) International publication number: WO 2022/252070

(57) **Abstract**

This application provides a tag locating method and system, and a related apparatus. In the method, a first network element sends first indication information to a location management function network element, where both the first network element and the location management function network element are network elements in a core network. The location management function network element may obtain, based on the first indication information, a result of locating a first tag, and determine location information of the first tag based on the result of locating the first tag. The first network element may obtain the location information of the first tag from the location management function network element. It can be learned that, in the tag locating method, the location information of the first tag can be obtained based on an architecture incorporating a cellular system and a passive or semi-active Internet of Things technology, to avoid extra costs due to repeated deployment of a passive or semi-active Internet of Things locating system.

## Description

### TECHNICAL FIELD

This application relates to the field of communications technologies, and in particular, to a tag locating method and system, and a related apparatus.

### BACKGROUND

A passive or semi-active Internet of Things technology is one of automatic identification technologies. A reader (Reader) conducts non-contact two-way data communication through radio frequency, and uses radio frequency to read and write a target object, for example, an electronic tag or a radio frequency card, to achieve target object identification and data exchange. The target object may also be referred to as an induction electronic chip, a proximity card, an induction card, a contactless card, an electronic barcode, or another tag (Tag). In such a passive or semi-active Internet of Things technology with a tag-reader structure, if tag locating is required, a locating system needs to be deployed separately. In addition, as a cellular system already provides a locating capability; for an enterprise or an industrial park with both a passive or semi-active Internet of Things system and a cellular system, repeated deployment of a locating system or a locating capability certainly leads to extra costs.

Therefore, in this case, how to implement tag locating without causing extra costs due to repeated deployment of a locating system is an urgent problem to be resolved.

### SUMMARY

This application provides a tag locating method and system, and a related apparatus, to implement tag locating based on an architecture incorporating a cellular system and a passive or semi-active Internet of Things technology.

According to a first aspect, this application provides a device locating method. In the method, a location management function network element receives first indication information from a first network element, where the first indication information indicates the location management function network element to locate a first tag, and both the location management function network element and the first network element are network elements in a core network; the location management function network element obtains, based on the first indication information, a result of locating the first tag, and determines location information of the first tag based on the result of locating the first tag; and the location management function network element sends the location information of the first tag to the first network element.

It can be learned that, in this application, tag locating in an architecture incorporating a cellular system and a passive or semi-active Internet of Things technology may be implemented, that is, location information of a tag may be obtained, by using a location management function network element, to avoid extra costs due to repeated deployment of a locating system.

In an optional implementation, the first indication information includes an identifier of the first tag. In another optional implementation, the first indication information is an indication used to indicate the location management function network element to locate the first tag. In still another optional implementation, the first indication information includes the indication and the identifier of the first tag, where the indication indicates to locate the first tag identified by the identifier.

In an optional implementation, that the location management function network element obtains, based on the first indication information, the result of locating the first tag may include: The location management function network element sends second indication information to an access and mobility management function network element, where the second indication information indicates each first receiver of the first tag to measure an uplink signal of the first tag; and the location management function network element obtains, from the access and mobility management function network element, first measurement information obtained by each first receiver through measurement.

The second indication information is obtained based on the first indication information, or the second indication information may be the first indication information. It can be learned that, in this implementation, the location management network element needs to obtain, by using the access and mobility management function network element, the first measurement information obtained by each first receiver of the first tag through measurement.

In an optional implementation, before the location management function network element obtains the first measurement information measured by each first receiver from the access and mobility management function network element, the method further includes: The location management function network element receives third indication information from the first network element, where the third indication information includes an identifier of one or more first access network devices, and the first access network device is an access network device to which a corresponding first receiver belongs; and the location management function network element sends fourth indication information to the access and mobility management function network element, where the fourth indication information indicates the access and mobility management function network element to route the second indication information to each first access network device, and the fourth indication information is obtained based on the third indication information.

Optionally, the second indication information may be referred to as locating information for short.

It can be learned that, in this implementation, to enable the access and mobility management function network element to route the second indication information to a corresponding access network device correctly, that is, the first access network device, the location management function network element may send the fourth indication information to the access and mobility management function network element based on the identifier of the one or more first access network devices, so that the access and mobility management function network element routes the second indication information to the corresponding access network device, to help the access and mobility management function network element obtain the first measurement information from the corresponding access network device.

In this application, based on the tag locating method according to the first aspect, the location management function network element may further receive fifth indication information from the first network element, where the fifth indication information indicates the location management function network element to locate one or more second tags; and the location management function network element obtains, based on the fifth indication information, a result of locating the one or more second tags, and then determines the location information of the first tag based on the result of locating the first tag, the result of locating the one or more second tags, and known location information of the one or more second tags.

It can be learned that, in the tag locating method, not only location information of a tag can be obtained based on the architecture incorporating the cellular system and the passive or semi-active Internet of Things technology, to avoid extra costs due to repeated deployment of a locating system, and the location information of the first tag can also be determined based on the result of locating the second tag (that is, a reference tag) and the known location information of the second tag, to improve precision of locating the tag.

In an optional implementation, the fifth indication information includes an identifier of each second tag, or includes an identifier of each second tag and known location information of each second tag. In another optional implementation, the fifth indication information may further include an indication, to indicate the location management function network element to obtain the result of locating the second tag identified by one or more identifiers. The identifier in the fifth indication information may be in a one-to-one correspondence with the known location information.

That the location management function network element obtains, based on the fifth indication information, the result of locating the one or more second tags may include: The location management function network element sends sixth indication information to the access and mobility management function network element, where the sixth indication information indicates a second receiver of each second tag to measure an uplink signal of the second tag, and the sixth indication information is obtained based on the fifth indication information, and then the location management function network element receives, from the access and mobility management function network element, second measurement information obtained by each second receiver through measurement.

It can be learned that, in this implementation, the location management function network element needs to send the sixth indication information (that may be referred to as locating information for short, that is, locating information for the one or more second tags) to the access and mobility management function network element, to obtain the second measurement information of the one or more second tags.

In an optional implementation, to enable the access and mobility management function network element to route the locating information to a corresponding second access network device correctly, that is, an access network device to which the second receiver of the second tag belongs, the method further includes: The location management function network element receives seventh indication information from the first network element, where the seventh indication information includes an identifier of one or more second access network devices; and the location management function network element sends eighth indication information to the access and mobility management function network element, where the eighth indication information indicates the access and mobility management function network element to route the sixth indication information to each second access network device, and the eighth indication information is obtained based on the seventh indication information.

It can be learned that, when there are a plurality of second receivers, this implementation is advantageous for the access and mobility management function network element to route the locating information, that is, the sixth indication information, to the corresponding second access network device correctly.

According to the tag locating method in this application, the method further includes: The location management function network element receives ninth indication information from the first network element, where the ninth indication information indicates the location management function network element to locate each first helper of the first tag; and the location management function network element obtains, based on the ninth indication information, a result of locating each first helper.

Further, the location management function network element determines the location information of the first tag based on the result of locating the first tag and the result of locating each first helper. Alternatively, the location management function network element determines the location information of the first tag based on the result of locating the first tag, the result of locating each first helper, the result of locating the one or more second tags, and the known location information of the one or more second tags.

It can be learned that, in a tag locating method, the location management function network element may determine the location information of the first tag based on the first measurement information of the first tag and a result of locating one or more first helpers. In another tag locating method, the location management function network element may determine the location information of the first tag based on the first measurement information of the first tag, the second measurement information of the one or more second tags, the known location information of the one or more second tags, and the second measurement information of the one or more second tags. Therefore, precision of locating the tag is further improved.

In an optional implementation, the ninth indication information includes an identifier of each first helper. In another optional implementation, the ninth indication information further includes an indication used to indicate to locate the first helper identified by the identifier.

That the location management function network element obtains, based on the ninth indication information, the result of locating each first helper may include: The location management function network element sends tenth indication information to the access and mobility management function network element, where the tenth indication information indicates a third access network device to which each first helper belongs to measure a result of locating the first helper, and the tenth indication information is obtained based on the ninth indication information; and the location management function network element obtains the result, measured by each third access network device, of locating each first helper from the access and mobility management function network element.

In an optional implementation, before the location management function network element sends the tenth indication information to the access and mobility management function network element to obtain the result of locating each first helper, the method further includes: The location management function network element sends eleventh indication information to the access and mobility management function network element, where the eleventh indication information indicates the access and mobility management function network element to send locating notification and privacy acknowledgment request information to each first helper; and then obtains a locating notification and privacy acknowledgment response message of each first helper from the access and mobility management function network element.

It can be learned that, in this implementation, each first helper is located only after the locating notification and privacy acknowledgment is completed, to help ensure location security of each first helper.

According to a second aspect, this application further provides a tag locating method. The tag locating method corresponds to the tag locating method according to the first aspect, and is described from a perspective of a first network element. The first network element is a network element in a core network and can obtain a request for locating a first tag. Specifically, the method includes: A first network element obtains a request for locating a first tag; the first network element sends first indication information to a location management function network element based on the request for locating, where the first indication information indicates the location management function network element to locate the first tag, and the location management function network element is a network element in a core network; and the first network element obtains location information of the first tag from the location management function network element, where the location information of the first tag is determined based on a result of locating the first tag, that is, the location information of the first tag is determined based on first measurement information of the first tag.

It can be learned that, in this application, tag locating in an architecture incorporating a cellular system and a passive or semi-active Internet of Things technology may be implemented, that is, location information of a tag may be obtained, by using a location management function network element, to avoid extra costs due to repeated deployment of a locating system.

Optionally, for another implementation of the first indication information, refer to related descriptions in the first aspect. Details are not described herein again.

In an optional implementation, to enable an access and mobility management function network element to route second indication information, that is, the locating information for the first tag, to a corresponding first access network device correctly, the first network element may further send third indication information to the location management function network element. The second indication information is obtained based on the first indication information. The second indication information indicates each first receiver to measure an uplink signal of the first tag. The third indication information includes an identifier of one or more first access network devices. The first access network device is an access network device to which the first receiver belongs. In this way, the identifier of the one or more first access network devices in the third indication information is used by the access and mobility management function network element to route the second indication information to each first access network device.

The result of locating the first tag includes the first measurement information measured by each first receiver.

In this application, based on the tag locating method according to the second aspect, the first network element may further send fifth indication information to the location management function network element, where the fifth indication information indicates the location management function network element to locate one or more second tags; and the location information of the first tag is determined based on the result of locating the first tag, a result of locating the one or more second tags, and known location information of the one or more second tags.

It can be learned that, in the tag locating method, not only location information of a tag can be obtained based on the architecture incorporating the cellular system and the passive or semi-active Internet of Things technology, to avoid extra costs due to repeated deployment of a locating system, and the location information of the first tag can also be determined based on the result of locating the second tag (that is, a reference tag) and the known location information of the second tag, to improve precision of locating the tag.

Optionally, for related descriptions of the fifth indication information, refer to related content in the first aspect. Details are not described herein again.

In an optional implementation, to enable an access and mobility management function network element to route sixth indication information, that is, the locating information for the second tag, to a corresponding second access network device correctly, the first network element may further send seventh indication information to the location management function network element. The sixth indication information is obtained based on the fifth indication information. The sixth indication information indicates each second receiver to measure an uplink signal of the corresponding second tag. The seventh indication information is used by the access and mobility management function network element to route the sixth indication information to each second access network device.

The seventh indication information includes an identifier of one or more second access network devices. A result of locating each second tag includes second measurement information obtained by each corresponding second receiver through measurement.

In the tag locating method in this application, the method further includes: The first network element sends ninth indication information to the location management function network element, where the ninth indication information indicates the location management function network element to locate each first helper of the first tag. In this way, the location information of the first tag is determined based on the result of locating the first tag, a result of locating each first helper, the result of locating the one or more second tags, and the known location information of the one or more second tags. Alternatively, the location information of the first tag is determined based on the result of locating the first tag and a result of locating each first helper. Therefore, precision of locating the tag is further improved.

Optionally, for related descriptions of the ninth indication information, refer to related content in the first aspect. Details are not described herein again.

In addition, in this application, when the first network element determines that the first tag has never been inventorized, or determines that a previous inventory of the first tag has expired, an inventory process for the first tag may be triggered, to obtain an identifier of one or more first receivers of the first tag and an identifier of a first access network device to which each first receiver belongs.

Optionally, for each second tag, when the first network element determines that the second tag has never been inventorized, or determines that a previous inventory of the second tag has expired, an inventory process may be further triggered, to obtain an identifier of one or more second receivers of the second tag and an identifier of a second access network device to which each second receiver belongs.

This facilitates the first network element to send the third indication information or the seventh indication information to the location management function network element, to route corresponding locating information to a corresponding access network device correctly.

In this application, in downlink locating, the request for locating the first tag is triggered by an application function network element. In uplink locating, the request for locating the first tag is triggered by one or more first helpers of the first tag.

In this application, the first network element is an access and mobility management function network element. To be specific, the access and mobility management function network element may integrate or incorporate with a related function of the first network element, for example, the foregoing functions of triggering an inventory operation and obtaining a request for locating, so that the access and mobility management function network element may perform a related operation of the first network element. Alternatively, the first network element may be a network exposure function network element. To be specific, the network exposure function network element may integrate or incorporate with a related function of the first network element, for example, the foregoing functions of triggering an inventory operation and obtaining a request for locating, so that the network exposure function network element may perform a related operation of the first network element.

According to a third aspect, this application provides a tag locating method. The tag locating method corresponds to the tag locating method according to the first aspect and the second aspect, and is described from a perspective of an access and mobility management function network element. In the method, an access and mobility management function network element may receive second indication information from a location management function network element. The second indication information indicates each first receiver of a first tag to measure an uplink signal of the first tag. The second indication information is obtained based on first indication information. The first indication information indicates the location management function network element to locate the first tag. The location management function network element is a network element in a core network. In this way, after obtaining first measurement information obtained by each first receiver through measurement, the access and mobility management function network element may send the first measurement information obtained by each first receiver through measurement to the location management function network element. The first measurement information obtained by each first receiver through measurement is used to determine location information of the first tag.

It can be learned that, in the method, the access and mobility management function network element may receive, from the location management function network element, the second indication information used to measure the uplink signal of the first tag, to obtain the first measurement information of the first tag, and report the first measurement information to the location management function network element, to determine the location information of the first tag. Therefore, in the method, tag locating in an architecture incorporating a cellular system and a passive or semi-active Internet of Things technology is implemented, that is, location information of a tag is obtained, to avoid extra costs due to repeated deployment of a locating system.

That the access and mobility management function network element obtains the first measurement information obtained by each first receiver through measurement includes: The access and mobility management function network element sends the second indication information to each first access network device, where the first access network device is an access network device to which the first receiver belongs; and the access and mobility management function network element receives first measurement information obtained by a corresponding first receiver in each first access network device through measurement.

In addition, because the first tag may have a plurality of first receivers, to enable the access and mobility management function network element to route the second indication information to a corresponding access network device, that the access and mobility management function network element sends the second indication information to each first access network device may include: The access and mobility management function network element receives fourth indication information from the location management function network element, where the fourth indication information indicates the access and mobility management function network element to route the second indication information to each first access network device, the fourth indication information is obtained based on third indication information, and the third indication information includes an identifier of each first access network device; and the access and mobility management function network element further routes the second indication information to each first access network device based on the fourth indication information.

In addition, after receiving the second indication information, the access network device further needs to forward the second indication information to the corresponding first receiver, to obtain the first measurement information through measurement. Therefore, the access and mobility management function network element may further send twelfth indication information to each first access network device, where the twelfth indication information indicates each first access network device to forward the second indication information to the corresponding first receiver.

In this application, based on the tag locating method according to the third aspect, the access and mobility management function network element may further receive sixth indication information from the location management function network element, where the sixth indication information indicates a second receiver of each second tag to measure an uplink signal of the second tag, the sixth indication information is obtained based on fifth indication information, and the fifth indication information indicates the location management function network element to locate one or more second tags; and the access and mobility management function network element obtains, based on the sixth indication information, second measurement information obtained by each second receiver through measurement, and further sends the second measurement information obtained by each second receiver through measurement to the location management function network element, where the first measurement information obtained by each first receiver through measurement and the second measurement information obtained by each second receiver through measurement are used to determine the location information of the first tag.

It can be learned that, in the method, the access and mobility management function network element may further receive the sixth indication information, from the location management function network element, that indicates the second receiver to measure the uplink signal of the second tag, to send the obtained second measurement information to the location management function network element, so that the location management function network element determines the location information of the first tag based on each piece of first measurement information and each piece of second measurement information.

That the access and mobility management function network element obtains, based on the sixth indication information, the second measurement information obtained by each second receiver through measurement includes: The access and mobility management function network element sends the sixth indication information to each second access network device, where the second access network device is an access network device to which the second receiver belongs; and obtains, from a corresponding second receiver in each second access network device, second measurement information obtained by the second receiver through measurement.

In addition, because the second tag may also have a plurality of second receivers, to enable the access and mobility management function network element to route the sixth indication information to a corresponding access network device, that the access and mobility management function network element sends the sixth indication information to each second access network device may include: The access and mobility management function network element receives eighth indication information from the location management function network element, where the eighth indication information indicates the access and mobility management function network element to route the sixth indication information to each second access network device, the eighth indication information is obtained based on seventh indication information, and the seventh indication information includes an identifier of one or more second access network devices; and the access and mobility management function network element routes the sixth indication information to each second access network device based on the eighth indication information.

Similarly, for each second tag, the method further includes: The access and mobility management function network element sends thirteenth indication information to each second access network device, where the thirteenth indication information indicates each second access network device to forward the sixth indication information to the corresponding second receiver.

In the tag locating method in this application, the method further includes: The access and mobility management function network element receives tenth indication information from the location management function network element, where the tenth indication information indicates a third access network device to which each first helper belongs to measure a result of locating the first helper, the tenth indication information is obtained based on ninth indication information, and the ninth indication information indicates the location management function network element to locate each first helper of the first tag; in this way, the access and mobility management function network element obtains, based on the tenth indication information, the result of locating each first helper; and the access and mobility management function network element sends the result of locating each first helper to the location management function network element. Therefore, the first measurement information obtained by each first receiver through measurement and the result of locating each first helper are used to determine the location information of the first tag; or the first measurement information obtained by each first receiver through measurement, the second measurement information obtained by each second receiver through measurement, and the result of locating each first helper are used to determine the location information of the first tag.

It can be learned that, in the method, precision of locating the tag may be further improved.

That the access and mobility management function network element obtains, based on the tenth indication information, the result of locating each first helper includes: The access and mobility management function network element sends the tenth indication information to each third access network device, where the third access network device is an access network device to which the first helper belongs; and the access and mobility management function network element obtains the result of locating each first helper from each third access network device.

In an optional implementation, to ensure location security of each first helper, before the access and mobility management function network element obtains, based on the tenth indication information, the result of locating each first helper, the method further includes: The access and mobility management function network element receives eleventh indication information from the location management function network element, where the eleventh indication information indicates the access and mobility management function network element to send a locating notification and privacy acknowledgment request information to each first helper; the access and mobility management function network element sends the locating notification and privacy acknowledgment request information to each first helper; the access and mobility management function network element receives locating notification and privacy acknowledgment response information from each first helper; and the access and mobility management function network element sends the locating notification and privacy acknowledgment response message of each first helper to the location management function network element. Therefore, location security of each first helper is ensured.

According to a fourth aspect, this application further provides a tag locating method, applied to a first access network device, that corresponds to the methods according to the first aspect, the second aspect, and the third aspect. In the method, the first access network device receives second indication information from an access and mobility management function network element, where the second indication information indicates the first access network device to use a first receiver to measure an uplink signal of a first tag, and the first receiver used by the first access network device is a receiver of the first tag; and the first access network device determines, based on the second indication information, a result of locating the first tag, and sends the result of locating the first tag to the access and mobility management function network element.

The result of locating the first tag includes the first measurement information obtained by each first receiver through measurement.

It can be learned that, in the method, tag locating in an architecture incorporating a cellular system and a passive or semi-active Internet of Things technology is implemented, to avoid a waste of costs due to deployment of a plurality of locating systems.

In an optional implementation, after receiving the second indication information, the first access network device automatically forwards the second indication information to the corresponding first receiver. In another optional implementation, the first access network device further needs to receive twelfth indication information from the access and mobility management function, where the twelfth indication information indicates the first access network device to forward the second indication information to the corresponding first receiver; in this way, the first access network device forwards the second indication information to the corresponding first receiver; and the first access network device obtains measurement information of the first tag from the first receiver, where the result of locating the first tag includes the measurement information of the first tag.

According to a fifth aspect, this application further provides a tag locating system. The system includes a first network element and a location management function network element. The first network element is configured to: obtain a request for locating a first tag, and send first indication information to the location management function network element based on the request for locating, where the first indication information indicates the location management function network element to locate the first tag, and the location management function network element is a network element in a core network. The location management function network element is configured to: receive the first indication information from the first network element, obtain a result of locating the first tag, determine location information of the first tag based on the result of locating the first tag, and send the location information of the first tag to the first network element. The first network element is further configured to obtain the location information of the first tag from the location management function network element.

For an optional implementation of the first indication information, refer to related content in the first aspect. Details are not described herein again.

In an optional implementation, the system further includes an access and mobility management function network element. The location management function network element is further configured to send second indication information to the access and mobility management function network element, where the second indication information indicates each first receiver of the first tag to measure an uplink signal of the first tag, and the second indication information is obtained based on the first indication information. The access and mobility management function network element is configured to: receive the second indication information from the location management function network element, obtain, based on the second indication information, first measurement information obtained by each first receiver through measurement, and send the first measurement information obtained by each first receiver through measurement to the location management function network element, so that the location management function network element obtains, from the access and mobility management function network element, the first measurement information obtained by each first receiver through measurement, where the result of locating the first tag includes the first measurement information obtained by each first receiver through measurement.

In an optional implementation, the system further includes a first access network device to which each first receiver belongs. The access and mobility management function network element is further configured to send the second indication information to each first access network device. Each first access network device is further configured to: receive the second indication information, and obtain, based on the second indication information, first measurement information obtained by a corresponding first receiver through measurement. The access and mobility management function network element is configured to obtain, from each first access network device, the first measurement information obtained by the corresponding first receiver through measurement.

In an optional implementation, to enable the access and mobility management function network element to route the second indication information to a corresponding access network device correctly, in the system, the first network element is further configured to send third indication information to the location management function network element, where the third indication information includes an identifier of one or more first access network devices; the location management function network element is further configured to: receive the third indication information from the first network element, and send fourth indication information to the access and mobility management function network element, where the fourth indication information indicates the access and mobility management function network element to route the second indication information to each first access network device, and the fourth indication information is obtained based on the third indication information; and the access and mobility management function network element is further configured to: receive the fourth indication information from the location management function network element, and route the second indication information to each first access network device based on the fourth indication information. Therefore, the access and mobility management function network element can route the second indication information to the corresponding access network device correctly.

In an optional implementation, each first access network device is further configured to: receive the second indication information from the access and mobility management function network element, and forward the second indication information to the corresponding first receiver; and each first access network device is further configured to: obtain, from the corresponding first receiver, the first measurement information obtained by the first receiver through measurement, and send the first measurement information obtained by the corresponding first receiver through measurement to the access and mobility management function network element. To be specific, the first access network device may forward the second indication information to the corresponding first access network device, to obtain the corresponding first measurement information.

Optionally, the access and mobility management function network element is further configured to send twelfth indication information to each first access network device, where the twelfth indication information indicates each first access network device to forward the second indication information to the corresponding first receiver. That each first access network device forwards the second indication information to the corresponding first receiver specifically is that the second indication information is sent to the corresponding first receiver based on the twelfth indication information. To be specific, the access and mobility management function network element may send indication information to each first access network device, to indicate the first access network device to forward the second indication information to the corresponding first receiver.

Optionally, the first network element is further configured to send fifth indication information to the location management function network element, where the fifth indication information indicates the location management function network element to locate one or more second tags. The location management function network element is further configured to: receive the fifth indication information from the first network element, and obtain, based on the fifth indication information, a result of locating the one or more second tags. That the location management function network element determines the location information of the first tag based on the result of locating the first tag specifically is that the location information of the first tag is determined based on the result of locating the first tag, the result of locating the one or more second tags, and known location information of the one or more second tags.

It can be learned that, in the method, not only tag locating in an architecture incorporating a cellular system and a passive or semi-active Internet of Things technology is implemented, that is, location information of a tag is obtained, to avoid extra costs due to repeated deployment of a locating system, and precision of locating the tag can also be improved.

For an optional implementation of the fifth indication information, refer to related descriptions in the first aspect. Details are not described herein again.

That the location management function network element obtains, based on the fifth indication information, the result of locating the one or more second tags may include: The location management function network element is further configured to send sixth indication information to the access and mobility management function network element, where the sixth indication information indicates a second receiver of each second tag to measure an uplink signal of the second tag, and the sixth indication information is obtained based on the fifth indication information; the access and mobility management function network element is further configured to: receive the sixth indication information from the location management function network element, and obtain, based on the sixth indication information, second measurement information obtained by each second receiver through measurement; and the access and mobility management function network element is further configured to send the second measurement information obtained by each second receiver through measurement to the location management function network element; and the location management function network element is further configured to obtain, from the access and mobility management function network element, the second measurement information obtained by each second receiver through measurement, where the result of locating the second tag includes the second measurement information obtained by each second receiver through measurement.

The system further includes one or more second access network devices to which the second receiver belongs. That the access and mobility management function network element obtains, based on the sixth indication information, the second measurement information obtained by each second receiver through measurement may include: The access and mobility management function network element is further configured to send the sixth indication information to each second access network device; each second access network device is further configured to: receive the sixth indication information, and obtain, based on the sixth indication information, second measurement information obtained by a corresponding second receiver through measurement; and the access and mobility management function network element is further configured to obtain the corresponding second measurement information from each second access network device.

To enable the access and mobility management function network element to route the sixth indication information to a corresponding second access network device correctly, in the system, the first network element is further configured to send seventh indication information to the location management function network element, where the seventh indication information includes an identifier of one or more second access network devices; the location management function network element is further configured to receive the seventh indication information from the first network element, and send eighth indication information to the access and mobility management function network element, where the eighth indication information indicates the access and mobility management function network element to route the sixth indication information to each second access network device, and the eighth indication information is obtained based on the seventh indication information; and the access and mobility management function network element is further configured to: receive the eighth indication information from the location management function network element, and route the sixth indication information to each second access network device based on the eighth indication information. Therefore, the access and mobility management function network element can route the sixth indication information to the corresponding second access network device correctly.

In an optional implementation, each second access network device is further configured to: receive the sixth indication information from the access and mobility management function network element, and forward the sixth indication information to the corresponding second receiver; and each second access network device is further configured to: obtain, from the corresponding second receiver, second measurement information obtained by the second receiver through measurement, and send the second measurement information obtained by the corresponding second receiver through measurement to the access and mobility management function network element.

In another optional implementation, the access and mobility management function network element is further configured to send thirteenth indication information to each second access network device, where the thirteenth indication information indicates each second access network device to forward the sixth indication information to the corresponding second receiver. That each second access network device forwards the sixth indication information to the corresponding second receiver specifically is that the sixth indication information is sent to the corresponding second receiver based on the thirteenth indication information.

Optionally, in the system, the first network element is further configured to send ninth indication information to the location management function network element, where the ninth indication information indicates the location management function network element to locate each first helper of the first tag; and the location management function network element receives the ninth indication information from the first network element, and obtains, based on the ninth indication information, a result of locating each first helper.

In this way, that the location management function network element determines the location information of the first tag based on the result of locating the first tag specifically is that the location information of the first tag is determined based on the result of locating the first tag, the result of locating each first helper, the result of locating the one or more second tags, and the known location information of the one or more second tags. Alternatively, the location information of the first tag is determined based on the result of locating the first tag and the result of locating each first helper.

It can be learned that the system is advantageous for improving precision of locating the tag.

For an optional implementation of the ninth indication information, refer to related descriptions in the first aspect. Details are not described herein again.

Optionally, that the location management function network element obtains, based on the ninth indication information, the result of locating each first helper may include: The location management function network element is further configured to send tenth indication information to the access and mobility management function network element, where the tenth indication information indicates a third access network device to which each first helper belongs to measure the result of locating the first helper, and the tenth indication information is obtained based on the ninth indication information; the access and mobility management function network element is further configured to: receive the tenth indication information from the location management function network element, and obtain, based on the tenth indication information, the result of locating each first helper; and the access and mobility management function network element is further configured to send the result of locating each first helper to the location management function network element.

Optionally, the system further includes the third access network device that each first helper accesses. The access and mobility management function network element is further configured to send the tenth indication information to each third access network device. Each third access network device is configured to: obtain a result of locating a corresponding first helper, and send the result of locating the corresponding first helper to the access and mobility management function network element.

Optionally, to ensure location security of each first helper, in the system, the location management function network element is further configured to send eleventh indication information to the access and mobility management function network element, where the eleventh indication information indicates the access and mobility management function network element to send locating notification and privacy acknowledgment request information to each first helper; the access and mobility management function network element is further configured to: receive the eleventh indication information from the location management function network element, and before obtaining, based on the tenth indication information, the result of locating each first helper, send the locating notification and privacy acknowledgment request information to each first helper, and receive locating notification and privacy acknowledgment response information from each first helper; and the access and mobility management function network element is further configured to send the locating notification and privacy acknowledgment response message of each first helper to the location management function network element.

Optionally, in the system, the first network element is further configured to trigger an inventory process for the first tag, to obtain an identifier of one or more first receivers of the first tag and an identifier of a first access network device to which each first receiver belongs.

Optionally, in the system, the first network element is further configured to trigger an inventory process for each second tag, to obtain an identifier of one or more second receivers of the second tag, an identifier of one or more second helpers, and an identifier of a second access network device to which each second receiver belongs.

Optionally, the request for locating the first tag is triggered by an application function network element, or is triggered by one or more first helpers of the first tag.

Optionally, the first network element is an access and mobility management function network element or a network exposure function network element.

According to a sixth aspect, an embodiment of this application provides a communications apparatus. The communications apparatus has some or all functions of the location management function network element that performs the example of the method according to the first aspect. For example, a function of the communications apparatus may be a function in some or all embodiments of this application, or may be a function for implementing any one of embodiments in this application alone. The function may be implemented by hardware, or may be implemented by hardware executing corresponding software. The hardware or the software includes one or more units or modules corresponding to the foregoing function.

In an implementation, a structure of the communications apparatus may include a transceiver module and a processing module. The processing module is configured to support the communications apparatus in performing a corresponding function according to the foregoing method. The transceiver module is configured to support the communications apparatus in communicating with another device. The communications apparatus may further include a storage module. The storage module is configured to be coupled to the processing module and the transceiver module and store a computer program and data that are necessary for the communications apparatus.

In an implementation, the communications apparatus includes: the transceiver module, configured to receive first indication information from a first network element, where the first indication information indicates a location management function network element to locate a first tag, and both the location management function network element and the first network element are network elements in a core network; and the processing module, configured to: obtain, based on the first indication information, a result of locating the first tag, and determine location information of the first tag based on the result of locating the first tag. The transceiver module is configured to send the location information of the first tag to the first network element.

In an example, the processing module may be a processor, the transceiver module may be a transceiver, and the storage module may be memory.

According to a seventh aspect, an embodiment of this application provides another communications apparatus. The communications apparatus has some or all functions of the first network device in the example of the method according to the second aspect. For example, a function of the communications apparatus may be a function in some or all embodiments of this application, or may be a function for implementing any one of embodiments in this application alone. The function may be implemented by hardware, or may be implemented by hardware executing corresponding software. The hardware or the software includes one or more units or modules corresponding to the foregoing function.

In an implementation, a structure of the communications apparatus may include a transceiver module and a processing module. The processing module is configured to support the communications apparatus in performing a corresponding function according to the foregoing method. The transceiver module is configured to support the communications apparatus in communicating with another device. The communications apparatus may further include a storage module. The storage module is configured to be coupled to the processing module and the transceiver module and store a computer program and data that are necessary for the communications apparatus.

In an implementation, the communications apparatus includes: the processing module, configured to obtain a request for locating a first tag; and the transceiver module, configured to send first indication information to a location management function network element based on the request for locating, where the first indication information indicates the location management function network element to locate the first tag, and the location management function network element is a network element in a core network. The processing module is configured to obtain location information of the first tag from the location management function network element, where the location information of the first tag is determined based on a result of locating the first tag, that is, the location information of the first tag is determined based on first measurement information of the first tag.

In an example, the processing module may be a processor, the transceiver module may be a transceiver, and the storage module may be memory.

According to an eighth aspect, an embodiment of this application provides still another communications apparatus. The communications apparatus has some or all functions of the access and mobility management function network element in the example of the method according to the third aspect. For example, a function of the communications apparatus may be a function in some or all embodiments of this application, or may be a function for implementing any one of embodiments in this application alone. The function may be implemented by hardware, or may be implemented by hardware executing corresponding software. The hardware or the software includes one or more units or modules corresponding to the foregoing function.

In an implementation, a structure of the communications apparatus may include a transceiver module and a processing module. The processing module is configured to support the communications apparatus in performing a corresponding function according to the foregoing method. The transceiver module is configured to support the communications apparatus in communicating with another device. The communications apparatus may further include a storage module. The storage module is configured to be coupled to the processing module and the transceiver module and store a computer program and data that are necessary for the communications apparatus.

In an implementation, the communications apparatus includes the transceiver module, configured to receive second indication information from a location management function network element, where the second indication information indicates each first receiver of a first tag to measure an uplink signal of the first tag, the second indication information is obtained based on first indication information, the first indication information indicates the location management function network element to locate the first tag, and the location management function network element is a network element in a core network. In this way, after the processing module is configured to obtain first measurement information obtained by each first receiver through measurement, the transceiver module may be further configured to send the first measurement information obtained by each first receiver through measurement to the location management function network element; and the first measurement information obtained by each first receiver through measurement is used to determine location information of the first tag.

In an example, the processing module may be a processor, the transceiver module may be a transceiver, and the storage module may be memory.

According to a ninth aspect, an embodiment of this application provides a communications apparatus. The communications apparatus has some or all functions of the first access network device in the example of the method according to the fourth aspect. For example, a function of the communications apparatus may be a function in some or all embodiments of this application, or may be a function for implementing any one of embodiments in this application alone. The function may be implemented by hardware, or may be implemented by hardware executing corresponding software. The hardware or the software includes one or more units or modules corresponding to the foregoing function.

In an implementation, a structure of the communications apparatus may include a transceiver module and a processing module. The processing module is configured to support the communications apparatus in performing a corresponding function according to the foregoing method. The transceiver module is configured to support the communications apparatus in communicating with another device. The communications apparatus may further include a storage module. The storage module is configured to be coupled to the processing module and the transceiver module and store a computer program and data that are necessary for the communications apparatus.

In an implementation, the communications apparatus includes: the transceiver module, configured to receive second indication information from an access and mobility management function network element, where the second indication information indicates a first access network device to use a first receiver to measure an uplink signal of a first tag, and the first receiver used by the first access network device is a receiver of the first tag; and the processing module, configured to determine, based on the second indication information, a result of locating the first tag. Further, the transceiver module is further configured to send the result of locating the first tag to the access and mobility management function network element.

In an example, the processing module may be a processor, the transceiver module may be a transceiver, and the storage module may be memory.

According to a tenth aspect, an embodiment of the present invention provides a computer-readable storage medium. The computer-readable storage medium stores a computer program, the computer program includes program instructions, and when the program instructions are executed by a communications apparatus, the communications apparatus is enabled to perform the method according to any one of the first aspect to the fourth aspect.

According to an eleventh aspect, this application further provides a computer program product including a computer program. When the computer program product is run on a computer, the computer is enabled to perform the method according to any one of the first aspect to the fourth aspect.

### BRIEF DESCRIPTION OF DRAWINGS

FIG. 1 is a schematic diagram of a 5G communications system architecture;
FIG. 2 is a schematic diagram of another 5G communications system architecture;
FIG. 3 is a schematic diagram of a structure of a passive or semi-active Internet of Things system;
FIG. 4 is a schematic diagram of an incorporated architecture incorporating a 5G communications system and a passive or semi-active Internet of Things technology according to an embodiment of this application;
FIG. 5 is a schematic diagram of tag registration/authentication according to an embodiment of this application;
FIG. 6 is a schematic diagram of dynamically binding a receiver and a helper according to an embodiment of this application;
FIG. 7 is a schematic diagram of a tag locating method according to an embodiment of this application;
FIG. 8 is a schematic flowchart of a tag locating method 100 according to an embodiment of this application;
FIG. 9 is a schematic flowchart of a method for transmitting first indication information according to an embodiment of this application;
FIG. 10A and FIG. 10B are a schematic flowchart of a method for obtaining information about a first tag according to an embodiment of this application;
FIG. 11 is a schematic flowchart of a method for locating a first tag according to an embodiment of this application;
FIG. 12 is a schematic flowchart of a tag locating method 200 according to an embodiment of this application;
FIG. 13 is a schematic flowchart of a method for locating a second tag according to an embodiment of this application;
FIG. 14 is a schematic flowchart of a tag locating method 300 according to an embodiment of this application;
FIG. 15 is a schematic flowchart of a method for locating each first helper according to an embodiment of this application;
FIG. 16 is a schematic diagram of a structure of a communications apparatus according to an embodiment of this application; and
FIG. 17 is a schematic diagram of a structure of another communications apparatus according to an embodiment of this application.

### DESCRIPTION OF EMBODIMENTS

This application provides a device locating method. The device locating method can implement device locating in a scenario in which a cellular system incorporates with a passive or semi-active Internet of Things technology. In this way, extra costs due to repeated deployment of a locating system based on passive or semi-active IoT are avoided.

For ease of understanding, in this application, a 5G communications system architecture in an architecture incorporating a cellular system and a passive or semi-active Internet of Things technology is first described, then an RFID technology is used as an example to describe the passive or semi-active Internet of Things technology, and the architecture incorporating the cellular system and the passive or semi-active Internet of Things technology is finally described.

### 1. 5G communications system architecture

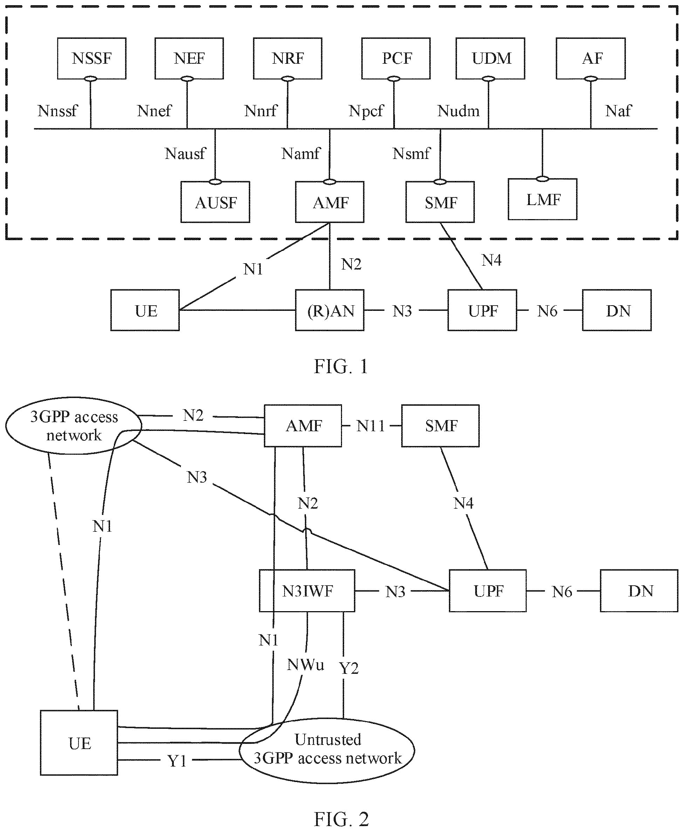

Refer to FIG. 1. FIG. 1 is a schematic diagram of a 5G communications system architecture to which this application is applicable. The 5G communications system architecture is 5G network infrastructure, network functions are decomposed based on modularization, and a decoupled network function (network function, NF) may be independently expanded, independently evolved, and deployed as required. A service-based interface is used for all NFs on a control plane. A same type of services may be invoked by a plurality of types of NFs, to reduce a degree of coupling defined for the interface between NFs, thereby finally implementing function customization as required in an entire network and flexibly supporting different service scenarios and requirements. In the architecture shown in FIG. 1, a network element in a dashed box is a service -based NF network element, an interface between NF network elements is a service-based interface, and a message to be exchanged is a service-based message. The architecture may include an access network and a core network, and optionally, may further include user equipment (user equipment, UE).

The UE is a device having a wireless transceiver function, and may be deployed on land, including an indoor or outdoor device, a hand-held device, a wearable device, or a vehicle-mounted device; may be deployed on the surface of water (for example, on a ship); or may be deployed in the air (for example, on an airplane, a balloon, or a satellite). The UE may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The UE may also be sometimes referred to as a terminal, a terminal device, an access terminal device, a vehicle-mounted terminal, an industrial control terminal, a UE unit, a UE station, a mobile station, a remote station, a remote terminal device, a mobile device, a UE agent, a UE apparatus, or the like. The UE may be fixed or mobile.

The access network is configured to implement an access-related function, may provide a network access function for an authorized user in a specific area, and can determine transmission tunnels of different quality based on a user level, a service requirement, and the like, to transmit user data. The access network forwards a control signal and the user data between a terminal device and the core network. The access network may include an access network device. For example, in this application, information exchanged between a tag and a network element that is in the core network may be forwarded by the access network device.

The access network device may be a device that provides access for the terminal device, and may include a radio access network (radio access network, RAN) device and an AN device. The (R)AN device is mainly responsible for functions on an air interface side such as radio resource management, quality of service (quality of service, QoS) management, and data compression and encryption. The RAN device may include base stations in various forms, for example, a macro base station, a micro base station (that may also be referred to as a small cell), a relay station, an access point, and a balloon station. In systems using different wireless access technologies, names of devices having a base station function may be different. For example, in a 5G system, a device is referred to as a RAN or a next-generation node base station (next-generation Node base station, gNB); and in a long term evolution (long term evolution, LTE) system, a device is referred to as an evolved NodeB (evolved NodeB, eNB or eNodeB).

The core network is responsible for maintaining subscription data of a mobile network, and providing functions such as session management, mobility management, policy management, and security authentication for the UE. The core network may include the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (also referred to as a network exposure function) (network exposure function, NEF) network element, a network function repository function (NF repository function, NRF) network element, a policy control function (policy control function, PCF) network element, and a unified data management (unified data management, UDM) network element, a unified repository (unified data repository, UDR) network element, a location management function (location management function, LMF) network element, a home gateway mobile location center (home gateway mobile location center, HGMLC), a visited gateway mobile location center (visited gateway mobile location center, VGMLC) network element, and an application function (application function, AF) network element.

The AMF network element is mainly responsible for mobility management in the mobile network, for example, user location updating, user registration with a network, and user switching. The SMF network element is mainly responsible for session management in the mobile network, for example, session establishment, modification, and release. A specific function is, for example, allocation of an internet protocol (internet protocol, IP) address to a user, or selecting a UPF that provides a packet forwarding function. The UPF network element is mainly responsible for forwarding and receiving user data, and may receive the user data from a data network and transmit the user data to the UE by using the access network device; or may receive the user data from the UE by using the access network device and forward the user data to a data network. The PCF network element mainly supports in providing a unified policy framework to control network behavior and providing a policy rule for a network function in a control layer, and is responsible for obtaining user subscription information related to policy decision-making. The PCF network element may provide policies such as a quality of service (Quality of Service, QoS) policy and a slice selection policy to the AMF network element and the SMF network element. The AUSF network element is configured to perform security authentication on the UE. The NSSF network element is configured to select a network slice for the UE. The NEF network element is mainly configured to support exposure of a capability and an event. The UDM/UDR network element is configured to store user data, for example, subscription data and authentication/authorization data. The AF network element mainly supports in interacting with a 3GPP core network to provide a service, for example, affecting data routing decision-making, affecting a policy control function, or providing some third-party services for a network side.

In the 5G communications system architecture, a unified locating framework based on the LMF network element is implemented, and both locating in 3 GPP access and locating in N3 GPP access are supported. The following locating scenarios are mainly supported: a locating scenario applicable to urgent calls in a network induced location request (Network Induced Location Request, NI-LR) process; a locating scenario initiated by a locating client or another third-party application function in a mobile-terminated location request (Mobile Terminated Location Request, MT-LR) process; and a locating scenario actively triggered by UE in a mobile-originated location request (Mobile Originated Location Request, MO-LR) process. In addition, the LMF network element further supports a plurality of locating methods, including a network-assisted global navigation satellite system (Global Navigation Satellite System, GNSS) method, a downlink locating method, an exclusive chip identifier (Exclusive Chip ID, eCID) locating method, an uplink locating method, a barometric pressure sensor locating method, a wireless local area network (Wireless Local Area Network, WLAN) locating method, a Bluetooth locating method, a terrestrial beacon system locating method, and the like.

The NRF network element mainly provides service registration, discovery, and authorization, and maintains available network function (network function, NF) instance information, to implement required network function and service configuration and interconnection between NFs. The service registration means that the NF network element can provide a service only after being registered with the NRF network element. The service discovery means that when an NF network element needs another NF network element to provide a service, the NF network element first needs to perform the service discovery by using the NRF network element, to discover an expected NF network element that provides a service for the NF network element. For example, when an NF network element 1 needs an NF network element 2 to provide a service, the NF network element 1 first needs to perform the service discovery by using the NRF network element, to discover the NF network element 2.

The data network (data network, DN) is used to provide a service for a user, may be a private network, for example, a local area network; may be an external network not controlled by an operator, for example, the Internet (Internet); or may be a dedicated network jointly deployed by operators, for example, a network that provides an IP multimedia subsystem (IP multimedia subsystem, IMS). The UE may access the DN through an established protocol data unit (protocol data unit, PDU) session.

In addition, in the 5G communications system architecture shown in FIG. 1, the UE and the AMF may interact with each other through an N1 interface, and interaction between other network function network elements is similar. For example, the AN and the AMF may interact with each other through an N2 interface, and an N3 interface supports selective activation/deactivation of a connection on a user plane. The SMF network element interacts with the UPF network element through an N4 interface. The UPF network element interacts with the DN through an N6 interface. The service-based interface may be used for interaction between all the NFs on the control plane. For example, the LMF network element may interact with another network function network element through a service-based interface N1mf, and an interface between the LMF network element and the AMF network element is NL1. The NSSF network element may interact with another network function network element through a service-based interface Nnssf. The NEF network element may interact with another network function network element through a service-based interface Nnef. The NRF network element may interact with another network function network element through a service-based interface Nnrf. The PCF network element may interact with another network function network element through a service-based interface Npcf. The UDM network element may interact with another network function network element through a service-based interface Nudm. The AF network element may interact with another network function network element through a service-based interface Naf. The AUSF network element may interact with another network function network element through a service-based interface Nausf. The AMF network element may interact with another network function network element through a service-based interface Namf. The SMF network element may interact with another network function network element through a service-based interface Nsmf.

Refer to FIG. 2. FIG. 2 is a schematic diagram of another 5G communications system architecture according to an embodiment of this application. A difference between FIG. 2 and FIG. 1 lies in that the 5G communications system architecture in FIG. 2 is a non-3GPP system architecture in 5G, and a terminal device and a 3GPP core network are allowed to be interconnected and interwork with each other by using a non-3 GPP technology. The non-3GPP technology may include but is not limited to: wireless fidelity (Wireless Fidelity, Wi-Fi), worldwide interoperability for microwave access (Worldwide Interoperability for Microwave Access, WiMAX), a code division multiple access (Code Division Multiple Access, CDMA) network, and the like. As shown in FIG. 2, compared with a trusted 3GPP access network that can directly access the 3GPP core network, an untrusted non-3GPP access network (Untrusted non-3 GPP Access Network) needs to be interconnected and interwork with the 3GPP core network through a security tunnel established by a security gateway. The security gateway may include but is not limited to an evolved packet data gateway (Evolved Packet Data Gateway, ePDG) or a non-3GPP interworking function (Non-3GPP InterWorking Function, N3IWF) network element. For example, the security gateway in FIG. 2 is the N3IWF network element. Y1, Y2, and Nwu that are shown in FIG. 2 are reference interfaces for N3GPP access, and may be used to reflect a network element that can be used for direct communication.

### 2. Passive or semi-active Internet of Things technology

A passive or semi-active Internet of Things technology is one of automatic identification technologies. A reader may conduct non-contact two-way data communication through radio frequency, and use radio frequency to read and write a target object, for example, an electronic tag or a radio frequency card, to achieve the purpose of identifying the target object and data exchange. The target object may also be referred to as an induction electronic chip, a proximity card, an induction card, a contactless card, an electronic tag, an electronic barcode, or the like.

For example, radio frequency identification (Radio Frequency Identification, RFID) is a passive or semi-active Internet of Things technology. The radio frequency identification RFID technology is used to automatically identify a tag by using a radio frequency signal and obtain related data, and the identification does not require a manual intervention. The RFID technology has advantages, that a barcode does not have, such as being water-proof, magnetic-proof, and high-temperature-resistant, and having long service life, a long reading distance, data encryption on a tag, a large data storage capacity, and an easy manner for changing stored information. The application of the RFID technology will bring revolutionary changes to retail, logistics, and other industries. The RFID technology is widely used. At present, typical applications are animal chips, chip car alarms, access control, parking lot control, production line automation, and material management.

The tag can be classified into two types. One type is batteryless tags, or passive tags (Passive Tag). After entering a magnetic field, the tag receives a radio frequency signal sent by a reader (Reader), and sends product information stored in the tag by using energy obtained from an induced current. The other type is battery-operated tags, or active tags (Active Tag). The tag may actively send a signal at a specific frequency, and the signal carries product information stored in the tag. After reading and decoding the signals, a reader sends the signals to a central information system/backend application system for related data processing.

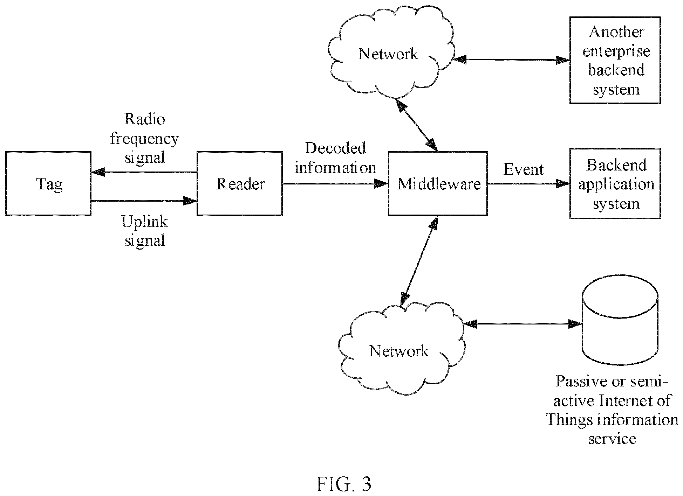

Refer to FIG. 3. FIG. 3 is a schematic diagram of a structure of a passive or semi-active Internet of Things system. As shown in FIG. 3, the passive or semi-active Internet of Things system mainly includes but is not limited to a tag, a reader, middleware, and another backend application system. Optionally, the passive or semi-active Internet of Things system may further include a passive or semi-active Internet of Things information service, another backend system, and the like. A function of the middleware is to carry out role management (for example, read the tag), map a memory area of the tag, map a logic reader, filter and aggregate redundant data, and so on. A protocol for an interface between the passive or semi-active Internet of Things system and a component element is specified in standards for an electronic product code (Electronic Product Code, EPC). For example, a second generation air interface (Gen2 Air Interface) protocol may be used between the tag and the reader for communication; a low level reader protocol (Low Level Reader Protocol, LLRP) may be used between the reader and the middleware for communication, and an application level (Application Level, ALE) is used between the middleware and the another backend application system for communication. In addition, in the standards for the EPF, the EPC is used to uniquely identify the tag. For the purpose of security, a secure identifier, for example, a secret identifier (Secret Identifier, SID), may be further used between the tag and the reader for interaction. In a procedure of locating the passive or semi-active Internet of Things system, the middleware or the backend application system learns about a reader that has read the tag, and location information of the tag is estimated based on location information of the reader.

### 3. Integration of a cellular system and a passive or semi-active Internet of Things technology

In this specification, an architecture incorporating a cellular system and a passive or semi-active Internet of Things technology is referred to as an incorporated architecture for short. In the incorporated architecture, a network function network element is added in the 5G communications system architecture shown in FIG. 1 or FIG. 2. The network function network element is a network element, in a core network, that can implement some or all functions of the middleware in the passive or semi-active Internet of Things system. The network function network element is referred to as a first network element for short in this specification. The first network element may implement tag locating based on the LMF network element described above. In addition, the cellular system, that is, a locating capability of the LMF network element in the 5G communications system architecture, is improved, so that the LMF network element can obtain a tag, or further obtain one or more pieces of information of a reference tag and a helper, to calculate location information of the tag.

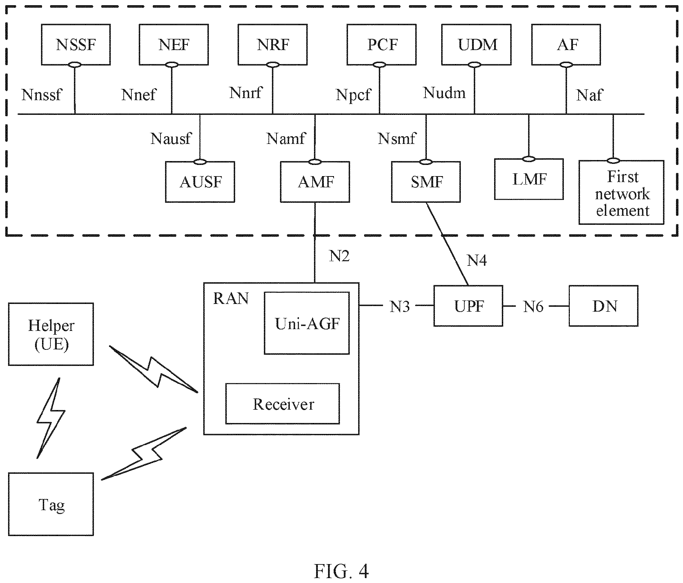

Refer to FIG. 4. FIG. 4 is a schematic diagram of an incorporated architecture incorporating a 5G communications system and a passive or semi-active Internet of Things technology according to an embodiment of this application. The incorporated architecture may include various network elements in the 5G communications system architectures shown in FIG. 1 and FIG. 2. FIG. 4 shows an example in which the 5G communications system architecture shown in FIG. 1 is included. A manner of extending a passive or semi-active Internet of Things technology in the 5G communications system architecture shown in FIG. 2 is the same, and details are not described herein again.

As shown in FIG. 4, the passive or semi-active Internet of Things technology may be used with a separate architecture, and a reader is separated into a receiver (receiver, also referred to as a receiver node) and a helper (helper, also referred to as a helper node). A reception link of the reader is included in the receiver, and a transmission link of the reader is included in the helper. In this way, when the receiver sends a downlink signal to the tag, the downlink signal needs to be first sent to the helper, and then the helper forwards the downlink signal to the tag; and when the tag sends an uplink signal, the uplink signal may be directly sent to the receiver. After the reader is separated into the receiver and the helper, a receive antenna and a transmit antenna are separated, so that self-interference that the reader could have can be reduced, to improve receiving sensitivity of the receiver and increase a distance for helping of the helper and a distance for receiving of the receiver, thereby helping reduce a quantity of deployed devices in large-scale deployment, for example, in a workshop, and reduce networking costs. Optionally, the passive or semi-active Internet of Things technology may alternatively be used with a non-separate architecture, that is, the reader and the helper are integrated. In this case, the reader includes both the transmission link and the reception link.

As shown in FIG. 4, in the incorporated architecture, the separate receiver may integrate or incorporate into a radio access network device or an AN device; and the separate helper may integrate into user equipment, for example, a wrist-band, a terminal, or an integrated access and backhaul node (integrated access and backhaul, IAB) node, so that the locating capability of the LMF may be used to implement tag locating. In addition, locations of the helper and the tag relative to each other may be further used to improve precision and real-time performance of locating. In addition, power consumption of a device can be reduced when the helper has no receive antenna, thereby increasing a standby time of the helper. Optionally, a reader with a non-separate architecture may integrate or incorporate into a radio access device or an AN device. In this case, in this application, locating assistance information may be obtained from the reader based on an LMF locating framework. The locating assistance information may include measurement information, for example, an angle of arrival and a signal strength, of the uplink signal in this application. In a feasible implementation, the LMF may obtain the locating assistance information according to an NR positioning protocol A (NR Positioning Protocol A, NRPPa) from the reader integrating or incorporating into the wireless access device or the AN device.

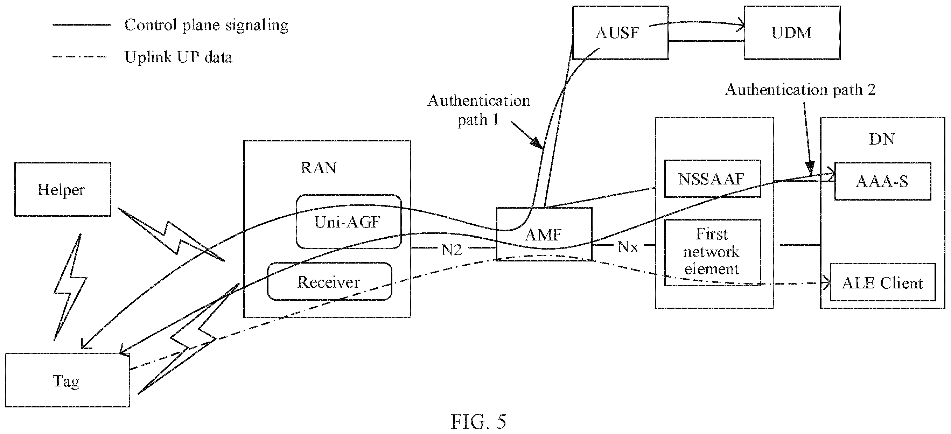

In the incorporated architecture, authentication of the tag may be implemented based on an authentication framework of the cellular system. In FIG. 4, the RAN device or the AN device establishes a control plane for the tag by using a new functional module, that is, a unified access gateway function (Unified Access Gateway Function, Uni-AGF), to support interaction between the tag and a 5G core network (5GC), so that the 5GC can perceive the tag. Specifically, refer to FIG. 5. FIG. 5 is a schematic diagram of tag registration/authentication according to an embodiment of this application. As shown in FIG. 5, a core network may complete two-way authentication of a tag based on control plane signaling by using an AUSF network element and a UDM network element, or complete two-way authentication of a tag by using a network slice specific authentication and authorization function-authentication, authorization, and accounting server (Network Slice Specific Authentication and Authorization Function-authentication, authorization, and accounting server, NSSAAF-AAA_S) represented by using dashed lines. As shown in FIG. 5, after the tag is registered/authenticated, data may be transmitted on a path for uplink user plane (user plane, UP) data. In addition, a network element shown in FIG. 5 is a network element mainly involved in tag registration/authentication. For detailed descriptions, refer to related content described in FIG. 1. Details are not described herein again.

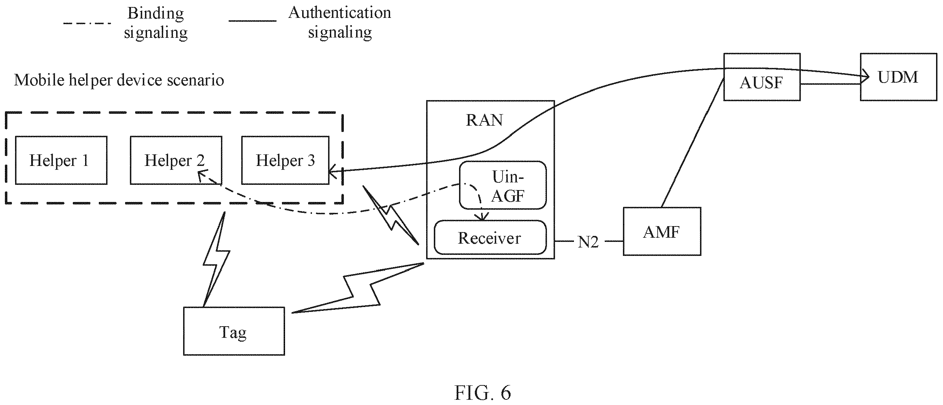

There may be a plurality of helpers of one tag. As shown in FIG. 6, helpers of a tag 1 may include a helper 1, a helper 2, and a helper 3. The helper 1 and the helper 2 may each be user equipment integrating or incorporating with a helper module, and the helper 3 may be an IAB node integrating or incorporating with a helper module, so that in a large-scale deployment scenario, a downlink signal sent by a receiver may be forwarded to the tag in time by using the helpers. Therefore, the receiver needs to be able to bind to a helper that the receiver is in charge of, and manage the helper, so that the receiver can select the helper for forwarding the downlink signal, for example, a downlink inventory command. There may be two manners of binding the receiver and the helper. One manner is to statically configure a binding relationship between the receiver and the helper, and the other manner is to dynamically configure a binding relationship between the receiver and the helper.

The static configuration of the binding relationship between the receiver and the helper may be that the helper and the receiver each are configured with a rod-shaped omnidirectional antenna, and the helper and the receiver are synchronized by using a dedicated frequency. Subsequently, the helper may relay the downlink signal, that is, forward the downlink signal to the tag. In the receiver, for example, an identifier of the helper may be statically configured. In this way, the receiver may perform unified management on the helpers, and is responsible for scheduling air interface resources for the helpers in a unified manner. The receiver may further learn about, in a time division or frequency division physical layer, a helper covering the tag or a helper responsible for the tag currently.

The dynamically configured binding relationship between the receiver and the helper may be binding signaling shown in FIG. 6. To be specific, a RAN side may complete a mapping relationship between the helper and an air interface by using a Uni-AGF, to forward the downlink signal to a right helper. In addition, if the helper is the IAB node integrating with the helper module, the core network further needs to perform a procedure of authorizing a helper function of the IAB node.

It can be learned that, in the incorporated architecture, the tag may complete an authentication and registration procedure similar to that of a terminal and a related binding and authorization procedure, so that the core network can perceive the tag, and the cellular system incorporates with the passive or semi-active Internet of Things technology.

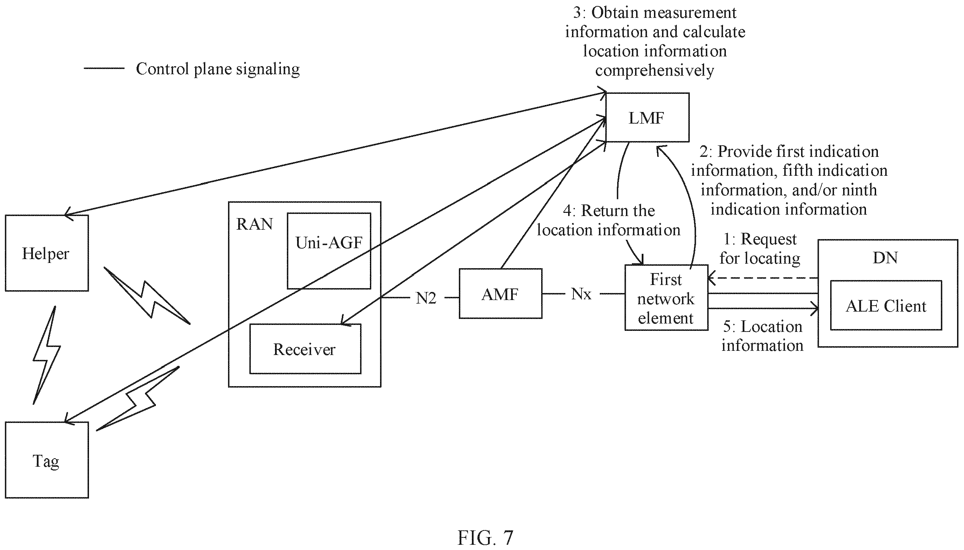

Based on the incorporated architecture shown in FIG. 4, an embodiment of this application further provides a schematic diagram of a structure of a tag locating method. The tag locating method is performed for locating based on an LMF network element. As shown in FIG. 7, a first network element may obtain a request for locating, for example, a request for locating from an application function network element, or a first network element receives a request for locating actively triggered by using an inventory message after a helper actively helps a tag; and then the first network element provides first indication information for the LMF network element, or further provides either or both of fifth indication information and ninth indication information. The first indication information indicates the LMF network element to locate a first tag, the fifth indication information indicates the LMF network element to locate one or more second tags, and the ninth indication information indicates the LMF network element to locate each first helper of the first tag. Further, the LMF network element obtains a corresponding result of locating (also referred to as a measurement parameter), for example, a result of locating the first tag, or further includes a result of locating the one or more second tags and a result of locating each first helper, so that the LMF network element may comprehensively calculate location information of the first tag based on these results of locating. Further, the LMF network element may return the location information of the first tag to the first network element. For the request for locating (that may be referred to as downlink locating) from the application function network element, the first network element may return the location information of the first tag to the application function network element. For the request for locating (that may be referred to as uplink locating for short) that is actively triggered in an inventory procedure and that is received by the first network element, the first network element may store the location information of the first tag in a UDM network element. In this way, when the first network element triggers the inventory procedure of the first tag or an ALE Client network element requests the first tag, the location information of the first tag may be directly carried in a returned result.

The inventory process means that the first network element sends a downlink command to enable the helper to help all tags, so that a receiver can obtain identifiers of some or all tags managed by the receiver.

The first tag is a target tag, that is, a tag whose location information is requested or a tag that is requested to be located. The second tag may be a reference tag of the first tag, and is used to assist in determining the location information of the first tag or assist in locating the first tag. For ease of description, one or more helpers of the first tag are referred to as a first helper for short, and one or more receivers of the first tag are referred to as a first receiver for short; and one or more helpers of the second tag are referred to as a second helper for short, and one or more receivers of the second tag are referred to as a second receiver for short.

Optionally, the first indication information, the fifth indication information, and the ninth indication information may be in a same message, or may be separately provided for the LMF network element by using different messages. This is not limited in this application.

Optionally, an implementation of the first indication information may include but is not limited to any one of the following Manner (1) to Manner (3).

Manner (1): The first indication information may be an indication (indication), and the indication indicates the LMF network element to locate the first tag. In this implementation, the LMF network element may implicitly learn about, based on a context or other information, the first tag that needs to be located.

Manner (2): The first indication information may be an identifier of the first tag, and the identifier of the first tag is used by the LMF network element to locate the first tag. In this implementation, the LMF network element may implicitly learn, based on a context or other information, that the first tag needs to be located. For example, the LMF network element may learn, by using a special type of messages for requiring a special action or in another manner, that the first tag needs to be located.

Manner (3): The first indication information may be an indication and an identifier of the first tag, and the indication may be used to explicitly indicate the LMF network element to locate the first tag identified by the identifier.

Similarly, the fifth indication information may be an indication (indication), and the indication indicates the LMF network element to locate the one or more second tags. The LMF network element may learn implicitly about, for example, based on a context or other information, the second tag that needs to be located. For example, the LMF network element may learn, by using a special type of messages for requiring a special action or in another manner, that the one or more second tags need to be located. Alternatively, the fifth indication information may be an identifier of the one or more second tags, and the identifier of the second tag is used by the LMF network element to locate a corresponding second tag, and the LMF network element may learn, based on a context or other information, that the second tag need to be located. Alternatively, the first indication information may be an indication and an identifier of the one or more second tags, and the indication may be used to explicitly indicate the LMF network element to locate the second tag identified by the identifier.

Similarly, the ninth indication information may be an indication (indication), and the indication indicates the LMF network element to locate the one or more first helpers. The LMF network element may learn implicitly about, for example, based on a context or other information, the first helper that needs to be located. For example, the LMF network element may learn, by using a special type of messages for requiring a special action or in another manner, that the one or more first helpers need to be located. Alternatively, the ninth indication information may be an identifier of the one or more first helpers, and the identifier of the first helper is used by the LMF network element to locate a corresponding first helper, and the LMF network element may learn, based on a context or other information, that the first helper needs to be located. Alternatively, the ninth indication information may be an indication and an identifier of the one or more first helpers, and the indication may be used to explicitly indicate the LMF network element to locate the first helper identified by the identifier.

It can be learned that, in the tag locating method provided in this application, an identifier of a tag can be provided for the LMF network element, or a related assistance parameter (for example, an identifier of a helper and/or a reference tag of the tag) may be further included. After obtaining a corresponding measurement parameter based on these parameters, the LMF network element may comprehensively calculate location information of the tag. In the tag locating method, not only the location information of the tag can be obtained, that is, tag locating can be implemented, based on the architecture incorporating the cellular system and the passive or semi-active Internet of Things technology, to avoid extra costs due to repeated deployment of an RFID locating system, and the location information of the tag can also be determined based on a result of locating each helper and/or a result of locating each reference tag, to further improve precision of locating the tag.

A method in this application is described below in detail with reference to the accompanying drawings.

This application provides a tag locating method 100. In the tag locating method 100, a first network element sends first indication information to an LMF network element. In this way, the LMF network element may obtain a result of locating a first tag, and determine location information of the first tag based on the result of locating the first tag, and the first network element may obtain the location information of the first tag from the LMF network element. It can be learned that, in the tag locating method 100, the location information of the tag can be obtained based on a cellular system incorporating with a passive or semi-active Internet of Things technology, to avoid extra costs due to repeated deployment of a locating system.

This application further provides a tag locating method 200. Compared with the tag locating method 100, in the tag locating method 200, the first network element further sends fifth indication information to the LMF network element. The LMF network element obtains a result of locating one or more second tags, and determines the location information of the first tag based on the result of locating the first tag, the result of locating the one or more second tags, and known location information of the one or more second tags. It can be learned that, in the tag locating method 100, not only the location information of the tag can be obtained based on the cellular system incorporating with the passive or semi-active Internet of Things technology, to avoid extra costs due to repeated deployment of a locating system, and the location information of the first tag can also be determined based on the result of locating the second tag (that is, a reference tag) and the known location information of the second tag, to improve precision of locating the tag.

This application further provides a tag locating method 300. Compared with the tag locating method 100, in the tag locating method 300, the first network element further sends ninth indication information to the LMF network element. The LMF network element obtains a result of locating each first helper, and determines the location information of the first tag based on the result of locating the first tag and the result of locating each first helper. It can be learned that, in the tag locating method 300, not only the location information of the tag can be obtained based on the cellular system incorporating with the passive or semi-active Internet of Things technology, to avoid extra costs due to repeated deployment of a locating system, and the location information of the first tag can also be determined based on the result of locating each first helper, to improve precision of locating the tag.

This application further provides a tag locating method 400. In the tag locating method 400, the tag locating method 100, the tag locating method 200, and the tag locating method 300 may be combined. To be specific, the first network element may send the first indication information, the fifth indication information, and the ninth indication information to the LMF network element. In this way, the LMF network element may determine the location information of the first tag based on the result of locating the first tag, the result of locating each first helper, the result of locating each second tag (that is, the reference tag), and the known location information of each second tag. It can be learned that, in the tag locating method 400, not only the location information of the tag can be obtained based on the cellular system incorporating with the passive or semi-active Internet of Things technology, to avoid extra costs due to repeated deployment of a locating system, and the location information of the first tag can also be determined based on the result of locating each first helper, the result of locating each second tag (that is, the reference tag), and the known location information of each second tag, to further improve precision of locating the tag.

In addition, the tag locating method 100, the tag locating method 200, the tag locating method 300, and the tag locating method 400 provided in this application may be used for downlink locating. The downlink locating is a request, received by the first network element from an application function network element, for locating the first tag. Optionally, the application function network element may send the request for locating the tag to the first network element by using a network exposure function (Network Exposure Function, NEF) network element, to ensure security of the location information; or there is a direct interface between the application function network element and the first network element, and the application function network element may directly send the request for locating the tag to the first network element.

The tag locating method 100, the tag locating method 200, the tag locating method 300, and the tag locating method 400 in this application may alternatively be used for uplink locating. The uplink locating means that the request for locating the first tag is triggered by one or more first helpers of the first tag. Therefore, the tag locating method 100, the tag locating method 200, the tag locating method 300, and the tag locating method 400 in this application may be applied to downlink locating, or may be applied to uplink locating. This is not limited in this application.
1. The tag locating method 100.

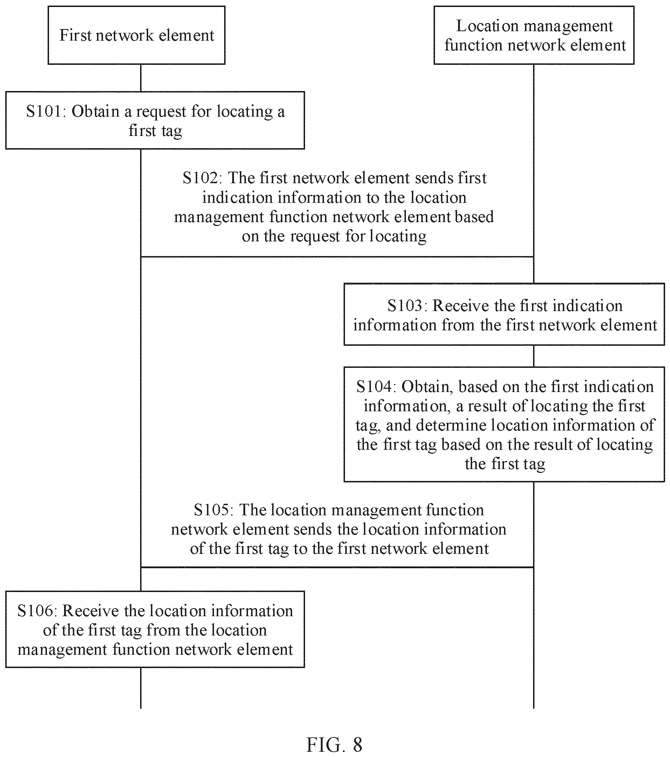

Refer to FIG. 8. FIG. 8 is a schematic flowchart of the tag locating method 100 according to an embodiment of this application. As shown in FIG. 8, the tag locating method 100 includes but is not limited to the following steps.

S101: A first network element obtains a request for locating a first tag.

For downlink locating, the first network element may directly or indirectly obtain the request for locating the first tag from an application function network element. For example, the application function network element is an ALE Client network element. In one manner, the ALE Client network element sends the request for locating the first tag to the first network element by using a network exposure function network element. In another manner, there is a direct interface between the ALE Client network element and the first network element, and the request, of the ALE Client network element, for locating the first tag may be directly sent to the first network element.

For uplink locating, after the first tag completes registration, the first network element may trigger the request for locating the first tag.

The request for locating the first tag may include an identifier of the first tag. The identifier of the first tag indicates the tag that needs to be located.

S102: The first network element sends first indication information to a location management function network element based on the request for locating.

The first indication information indicates the location management function network element to locate the first tag. An implementation of the first indication information may include but is not limited to any one of the foregoing Manner (1) to Manner (3). Details are not described herein again.

S103: The location management function network element receives the first indication information from the first network element.

S104: The location management function network element obtains, based on the first indication information, a result of locating the first tag, and determines location information of the first tag based on the result of locating the first tag.

S105: The location management function network element sends the location information of the first tag to the first network element.

S106: The first network element receives the location information of the first tag from the location management function network element.

It can be learned that, in the tag locating method 100, the location information of the tag can be obtained based on an incorporated architecture, to avoid extra costs due to repeated deployment of a locating system.

Some optional implementations in the tag locating method 100 are described below.

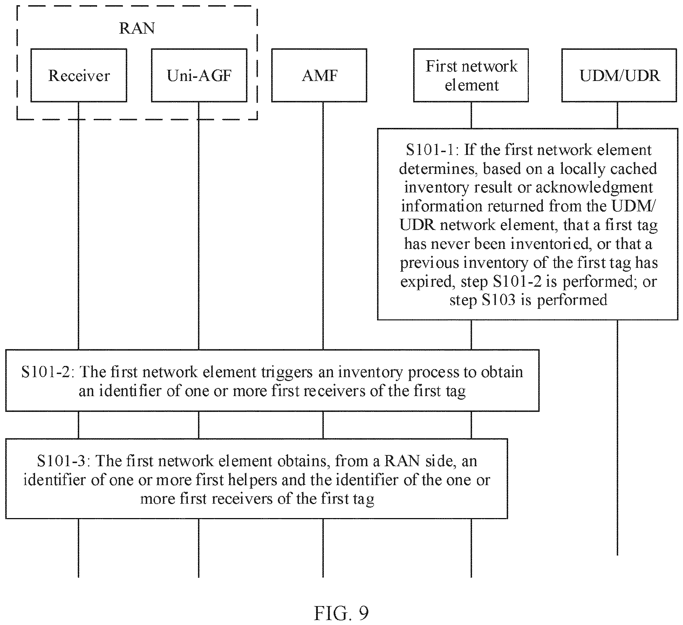

In an optional implementation, when the first network element receives the identifier of the first tag carried in the request for locating, the first network element needs to obtain information, for example, one or more first helpers and one or more first receivers of the first tag, so that the first network element can send the first indication information to the location management function network element. Specifically, refer to FIG. 9. FIG. 9 is a schematic flowchart in which the first network element obtains information about the first tag according to an embodiment of this application. For example, an access network device is a RAN, an access and mobility management function network element is an AMF network element, a unified data management network element is a UDM, and a unified data repository network element is a UDR. As shown in FIG. 9, that the first network element obtains the information about the first tag may include but is not limited to the following steps.

S101-1: If the first network element determines, based on a locally cached inventory result or acknowledgment information returned from the UDM/UDR network element, that the first tag has never been inventorized, or that a previous inventory of the first tag has expired, step S101-2 is performed; or if the first network element determines, based on the locally cached inventory result or acknowledgment information returned from the UDM/UDR network element, that the first tag has been inventorized and the previous inventory is still valid, step S101-3 is performed.

S101-2: The first network element triggers an inventory process to obtain an identifier of the one or more first receivers of the first tag.

The inventory process means that the first network element sends a downlink command to enable the helper to help all tags, so that a receiver can obtain identifiers of some or all tags managed by the receiver. In addition, because the tag does not have a non-access stratum (non-access stratum, NAS) protocol stack of a regular terminal, the tag cannot directly register with a core network and complete an authentication procedure, for example, a security authentication procedure, to authenticate validity of each other. Therefore, for the inventory process, refer to the authentication/registration procedure described in FIG. 5, that is, a Uni-AGF module in a corresponding access network device needs to establish a NAS connection for the tag, so that the tag that obtains an identifier can complete the registration and authentication procedure, and the core network can perceive that the tag is a special terminal device supporting a passive or semi-active Internet of Things technology, and store identification information. The identification information may include the identifier of the tag and an identifier of a corresponding receiver. Therefore, this helps the first network element obtain the identifier of the receiver corresponding to the first tag in step S101-2.

Optionally, the identifier of the tag may be an identifier that can identify the tag, for example, an electronic product code (Electronic Product Code, EPC) or a secret identifier (Secret Identifier, SID). The identifier of the receiver or an identifier of the helper are mainly device identifiers. When the helper is in a form of user equipment, for example, a mobile phone, the identifier of the helper may be a subscription permanent identifier (Subscription Permanent Identifier, SUPI).

In addition, based on static binding or a dynamic binding procedure shown in FIG. 6, the first helper of the first tag may bind to the corresponding first receiver. In this way, for a downlink signal of the first tag, each first receiver selects one or more first helpers that bind to the first helper for forwarding the downlink signal. That is, in the foregoing inventory process, information about the helper is not obtained, and the helper is managed by the receiver. Optionally, the information about the helper is transparent to the core network. Therefore, in the foregoing inventory process, the identifier of the tag and the identifier of the corresponding receiver are obtained.

S101-3: The first network element obtains, from a RAN side, an identifier of the one or more first helpers and an identifier of the one or more first receivers of the first tag.

Optionally, the obtained information may be in a form of a mapping relationship: first Receiver1_ID corresponding to first Helper1_ID corresponding to a first tag ID, first Receiver1_ID corresponding to first Helper2_ID corresponding to the first tag ID, and the like.

Optionally, if the first network element does not store the identifier of the first tag and an SUPI corresponding to each identifier of the one or more first helpers, and does not store an identifier of the access network device used by the AMF network element locating information to route locating information to the access network device, the first network element may obtain, from the UDM/UDR network element, the identifier of the first tag, the SUPI converted from each identifier of the one or more first helpers, and an identifier, of a corresponding first access network device, converted from each identifier of the one or more first receivers.

It can be learned that, in the foregoing steps S101-1 to S101-4, the first network element can obtain the information about the first tag, to help initiate the request for locating to the LMF network element.

In an optional implementation, if there is the direct interface between the first network element and the location management function network element, the first network element may directly send the first indication information to the location management function network element.

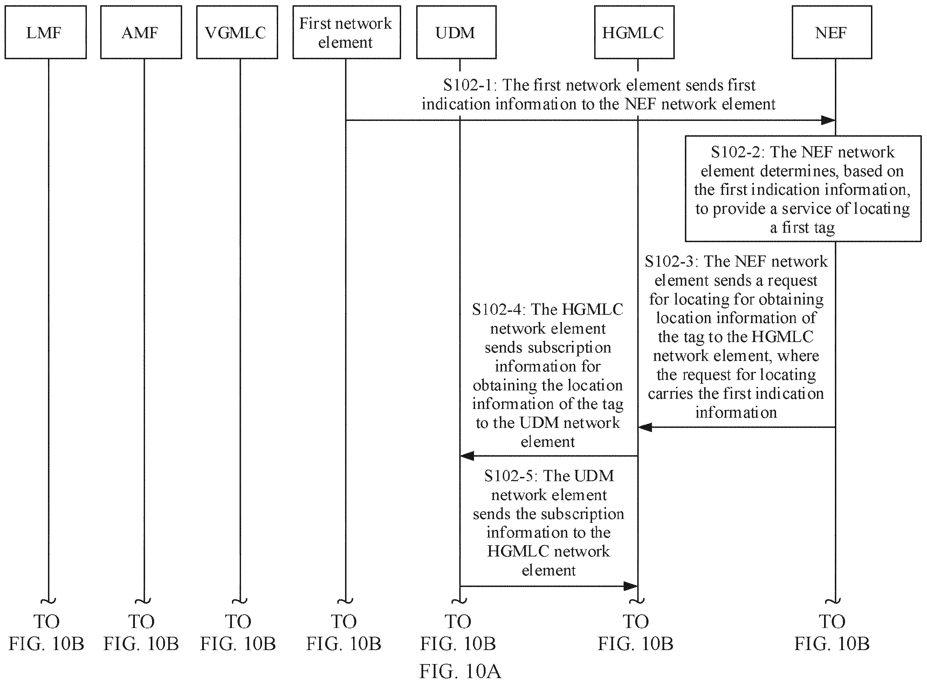

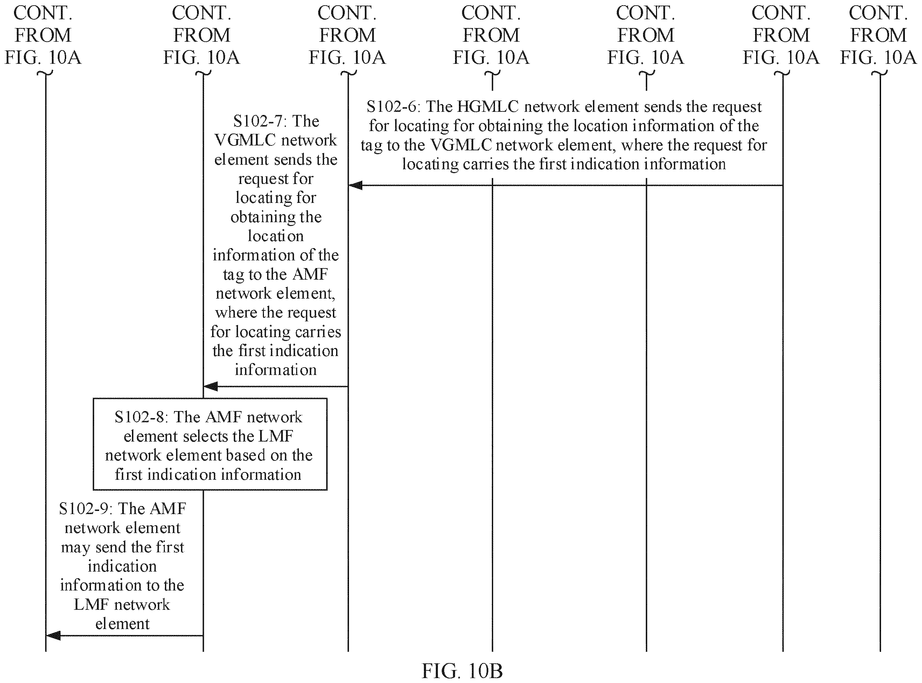

If there is no direct interface between the first network element and the location management function network element, the first network element may send the first indication information to the location management function network element by using the unified data management network element, a home gateway mobile location center network element, a network exposure function network element, an access and mobility management function network element, a visited gateway mobile location center network element, and the like. Refer to a schematic flowchart of transmitting the first indication information shown in FIG. 10A and FIG. 10B. In FIG. 10A and FIG. 10B, for example, a unified data management network element is a UDM, a home gateway mobile location center network element is a home gateway mobile location center (home gateway mobile location center, HGMLC) network element, a network exposure function network element is an NEF network element, an access and mobility management function network element is an AMF network element, a visited gateway mobile location center network element is a visited gateway mobile location center (visited gateway mobile location center, VGMLC) network element, and a location management function network element is an LMF network element. A process of transmitting the first indication information may include but is not limited to the following operations.

S102-1: The first network element sends the first indication information to the NEF network element.

S102-2: The NEF network element determines, based on the first indication information, to provide a service of locating the first tag.

Step S102-2 may be referred to as a determine location service (Determine Location Service) for short.

S102-3: The NEF network element sends the request for locating for obtaining the location information of the tag to the HGMLC network element.

The request for locating for obtaining the location information of the tag carries the first indication information.

The HGMLC network element is a conventional locating initiation device. In a 5G communications system architecture, the network exposure function network element initiates, in a unified manner, a request for locating. For example, the request for locating received by the first network element may be sent by the network exposure function network element. For compatibility, the HGMLC network element may still be retained in the 5G communications system architecture.

For example, the NEF network element sends Ngmlc_Location_Provide Location Request to the HGMLC network element, and Ngmlc Location Provide Location Request carries the first indication information.

S102-4: The HGMLC network element sends subscription information for obtaining the location information of the tag to the UDM network element.

For example, the HGMLC network element sends Nudm_SDM_Get to the UDM network element.

S102-5: The UDM network element sends the subscription information to the HGMLC network element.

For example, the UDM network element sends Nudm_UECM_Get to the HGMLC network element.

S102-6: The HGMLC network element sends the request for locating for obtaining the location information of the tag to the VGMLC network element, where the request for locating carries the first indication information.

For example, the HGMLC network element sends NgmlcLocation ProvideLocation Request that carries the first indication information to the VGMLC network element.

S102-7: The VGMLC network element sends the request for locating for obtaining the location information of the tag to the AMF network element, where the request for locating carries the first indication information.

For example, the VGMLC network element sends Namf_Location ProvideLocationInfo Request that carries the first indication information to the AMF network element.

S102-8: The AMF network element selects the LMF network element based on the first indication information.

S102-9: The AMF network element may send the first indication information to the LMF network element.

Therefore, in the foregoing steps S102-1 to S102-9, the LMF network element obtains the first indication information, and security of the request for locating is ensured by performing a related operation of the network exposure function network element.

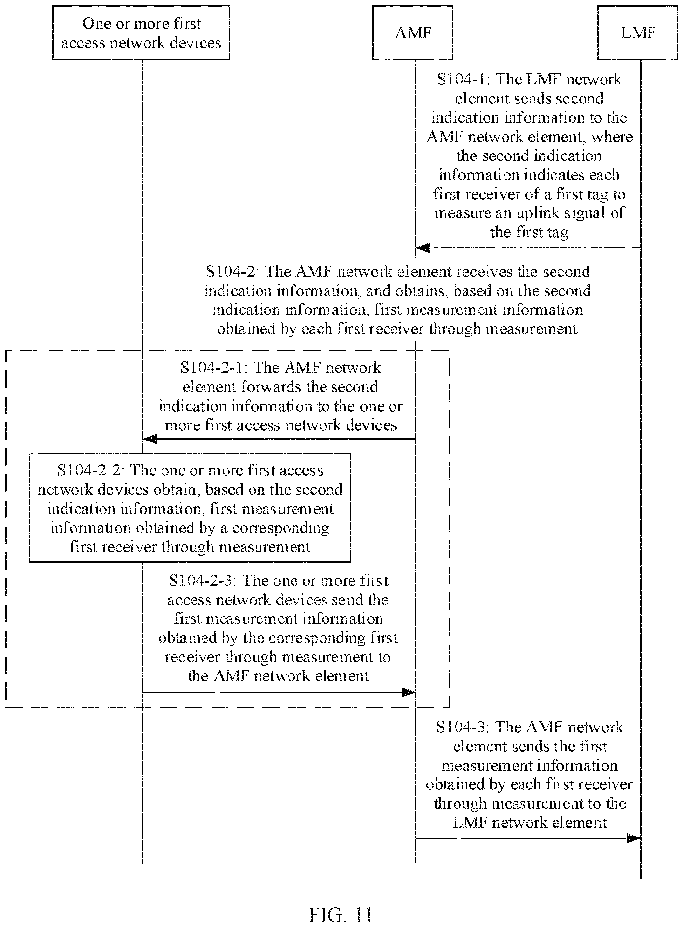

In an optional implementation, a process in which the location management function network element obtains the result of locating the first tag in step S104 may be referred to as a procedure performed by the location management function network element for locating the first tag. Optionally, the locating procedure may also be referred to as a procedure of measuring the first tag, and location information is different from location information determined by the location management function based on comprehensive information. Refer to FIG. 11. FIG. 11 is a schematic flowchart of a method for locating a first tag according to an embodiment of this application. In FIG. 11, for example, a location management function network element is an LMF network element, and an access and mobility management function network element is an AMF network element. The locating procedure may include but is not limited to the following steps.

S104-1: The LMF network element sends second indication information to the AMF network element, where the second indication information indicates each first receiver of a first tag to measure an uplink signal of the first tag.

The second indication information is obtained based on first indication information. For example, the second indication information may be the first indication information, for example, the first indication information described in the foregoing Manner (1) to Manner (3). For another example, the second indication information is obtained through conversion based on the first indication information.

S104-2: The AMF network element receives the second indication information, and obtains, based on the second indication information, first measurement information obtained by each first receiver through measurement.

S104-3: The AMF network element sends the first measurement information obtained by each first receiver through measurement to the LMF network element.

It can be learned that, according to the method, the LMF network element can obtain the first measurement information obtained by each first receiver through measurement.

That the AMF network element obtains, based on the second indication information, the first measurement information obtained by each first receiver through measurement in step S104-2 may include:

S104-2-1: The AMF network element forwards the second indication information to one or more first access network devices.

The first access network device is an access network device to which each first receiver belongs, that is, an access network device integrating or incorporating with the first receiver.

S104-2-2: The one or more first access network devices obtain, based on the second indication information, first measurement information obtained by a corresponding first receiver through measurement.

S104-2-3: The one or more first access network devices send the first measurement information obtained by the corresponding first receiver through measurement to the AMF network element.

The first tag may include one or more first receivers, and each first receiver may receive the uplink signal sent by the first tag. Therefore, in step S104-2-1, the access and mobility management function network element may forward the second indication information to the one or more first access network devices, so that the one or more first receivers may measure the uplink signal to obtain one or more pieces of first measurement information. The first measurement information may include parameters such as an angle of arrival and a signal strength of the uplink signal.

In an optional implementation, for the access and mobility management function network element to correctly route the second indication information to the first access network device to which each first receiver belongs in step S104-2-1, in step S102, the first network element further needs to send third indication information to the LMF network element. The third indication information includes an identifier of the one or more first access network devices. Further, in step S104-1, the LMF network element further needs to send fourth indication information to the access and mobility management function network element. The fourth indication information indicates the access and mobility management function network element to route the second indication information to each first access network device. In this way, the access and mobility management function network element receives the fourth indication information from the LMF network element, to route the second indication information to each first access network device based on the identifier of the one or more first access network devices. The fourth indication information may be the same as the third indication information, or may be generated or converted based on the third indication information.

For a procedure in which the first network element sends the third indication information to the LMF network element, refer to the process of transmitting the first indication information in FIG. 10A and FIG. 10B. Optionally, the third indication information and the first indication information may be transmitted in a same message.

In step S 104-2-2, that the one or more first access network devices obtain, based on the second indication information, the first measurement information obtained by the corresponding first receiver through measurement may be that each first access network device forwards the second indication information to the corresponding first receiver; and the first receiver may measure the corresponding first measurement information and send the first measurement information to a corresponding first access network device.

Optionally, the access and mobility management function network element may send twelfth indication information to each first access network device. The twelfth indication information indicates each first access network device to forward the second indication information to the corresponding first receiver. The twelfth indication information may be an indication, to trigger the first access network device to forward the second indication information to the corresponding first receiver. In this way, each first access network device receives the second indication information from the access and mobility management function network element, receives the twelfth indication information from the access and mobility management function network element, and may send the second indication information to the corresponding first receiver. Therefore, each first receiver may obtain the corresponding first measurement information through measurement, and then send the information to the corresponding first access network device.

Optionally, the first indication information and the third indication information that are sent by the first network element to the LMF network element may be in a same message, or may be in different messages. Similarly, the second indication information and the fourth indication information that are sent by the LMF network element to the access and mobility management function network element may be in a same message, or may be in different messages. The second indication information and the twelfth indication information that are sent by the access and mobility management function network element to each first access network device may be in a same message or a plurality of messages.

In an optional implementation, for a transmission process in which the location management function network element sends the location information of the first tag to the first network element in step S105, refer to the process of transmitting the first indication information in FIG. 10A and FIG. 10B. To be specific, the LMF network element sends the information to the AMF network element, the VGMLC network element, the HGMLC network element, and the NEF network element sequentially, and then to the first network element. Details are not described herein again.

2. The tag locating method 200.

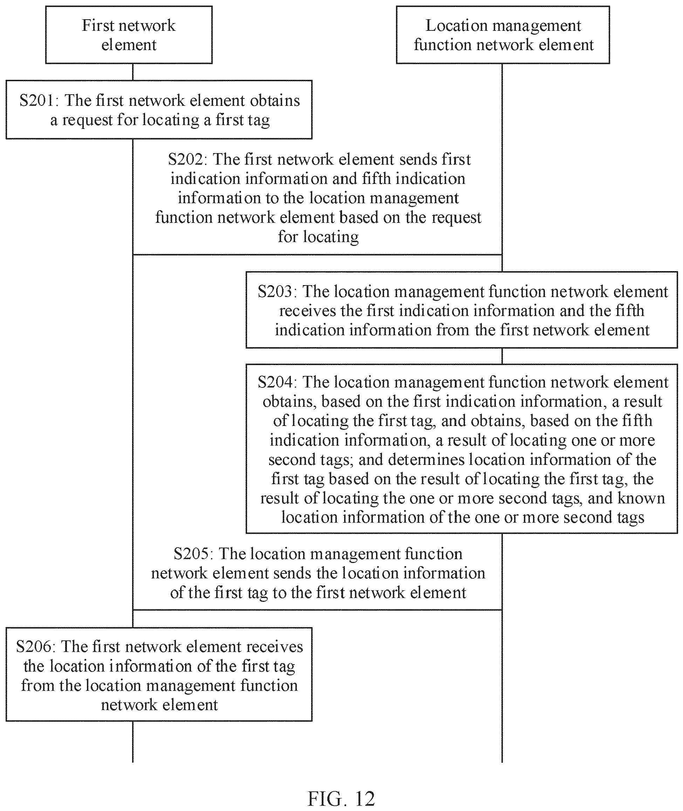

Refer to FIG. 12. FIG. 12 is a schematic flowchart of the tag locating method 200 according to an embodiment of this application. A difference between the tag locating method 200 shown in FIG. 12 and the tag locating method 100 shown in FIG. 8 lies in that, in the tag locating method 200, not only the location information of the tag can be obtained based on an architecture incorporating the cellular system and the passive or semi-active Internet of Things technology, to avoid extra costs due to repeated deployment of a locating system, and the location information of the first tag can also be determined based on the result of locating the second tag (that is, a reference tag) and the known location information of the second tag, to improve precision of locating the tag.

As shown in FIG. 12, the tag locating method 200 may include but is not limited to the following steps.

S201: A first network element obtains a request for locating a first tag.

Step S201 is similar to related descriptions of step S101, and a difference lies in that, in addition to an identifier of the first tag, the request for locating further includes:
an identifier of one or more second tags that indicates a reference tag for locating; and
a known location of each second tag that is in a one-to-one correspondence with the identifier of the second tag and that indicates the known location of the second tag.

S202: The first network element sends first indication information and fifth indication information to a location management function network element based on the request for locating.

For a related parameter of the first indication information, refer to related content in the tag locating method 100. Details are not described herein again. Optionally, the first network element may learn, based on related information of the second tag carried in the request for locating, that each second tag further needs to be located, and obtain a corresponding result of locating, that is, second measurement information, to perform step S202.

The fifth indication information indicates the location management function network element to locate the one or more second tags. Optionally, the fifth indication information may be an indication, and the location management function network element may learn, based on the indication, the one or more second tags that need to be located. Optionally, the fifth indication information may include an identifier of each second tag, or include an identifier and known location information of each second tag.

S203: The location management function network element receives the first indication information and the fifth indication information from the first network element.

S204: The location management function network element obtains, based on the first indication information, a result of locating the first tag, and obtains, based on the fifth indication information, a result of locating the one or more second tags.

S205: The location management function network element determines location information of the first tag based on the result of locating the first tag, the result of locating the one or more second tags, and known location information of the one or more second tags.

S206: The location management function network element sends the location information of the first tag to the first network element.

Optionally, after obtaining the location information of the first tag, the first network element may directly or indirectly send the information to an application function network element, or store the location information of the first tag.

It can be learned that, the tag locating method 200 can determine the location information of the first tag based on the result of locating the one or more second tags (that is, the reference tag) and the known location information of the one or more second tags, to improve precision of locating the first tag.

Some possible implementations in the tag locating method 200 are described below.

In an optional implementation, when the request for locating received by the first network element carries the identifier of the one or more second tags, the first network element needs to obtain an identifier of one or more second receivers of each second tag. Specifically, refer to related steps, shown in FIG. 9, in which the first network element obtains the information about the first tag, for example, the first network element performs a related operation of triggering an inventory process, to obtain the foregoing information. Optionally, the identifier of the one or more second receivers and an identifier of one or more second access network devices corresponding to the identifier of each second tag may be further obtained from a RAN side or from a UDMIUDR network element based on the identifier of the one or more second receivers. Details are not described herein again. Therefore, the first network element can obtain related information of each second tag, to help initiate a request for locating each second tag to the LMF network element.

In an optional implementation, if there is a direct interface between the first network element and the location management function network element, the first network element may directly send the first indication information and the fifth indication information to the LMF network element. If there is no direct interface between the first network element and the location management function network element, for how the first network element sends the first indication information and the fifth indication information to the location management function network element, refer to a schematic flowchart of transmitting the first indication information shown in FIG. 10A and FIG. 10B. Optionally, the fifth indication information and the first indication information may be in a same message. To be specific, the location management function network element obtains the first indication information and the fifth indication information through steps S102-1 to S102-9.

Optionally, the fifth indication information may alternatively be separately transmitted through the procedure of transmitting the first indication information shown in FIG. 10A and FIG. 10B. To be specific, the first indication information is replaced with the fifth indication information. Details are not described herein again.

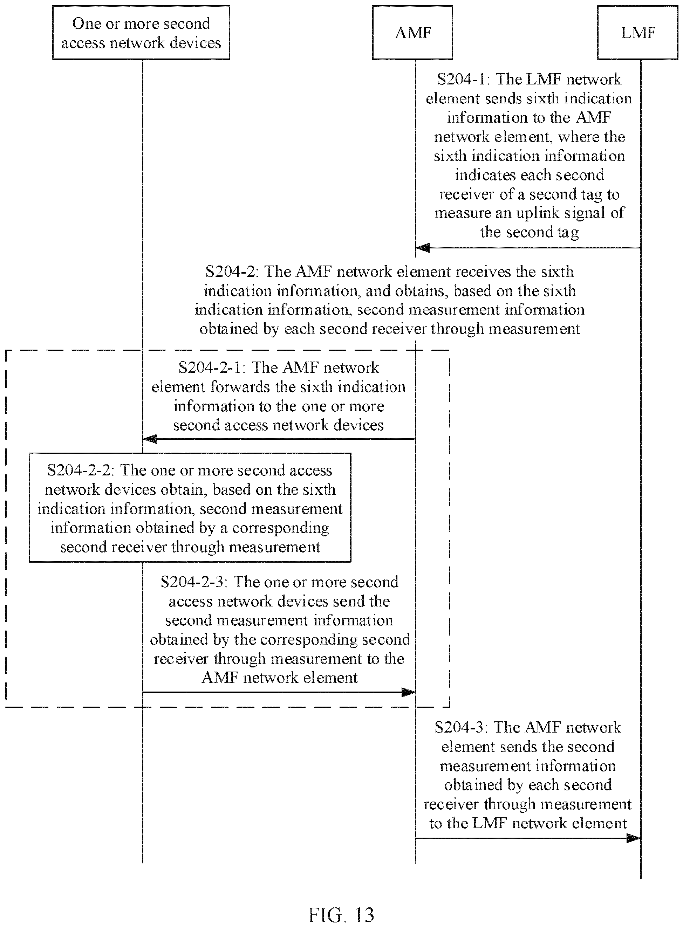

In an optional implementation, a process in which the location management function network element obtains, based on the fifth indication information, a result of locating each second tag in step S204 may be referred to as a procedure performed by the LMF network element for locating each second tag. Optionally, the locating procedure may also be referred to as a procedure of measuring the second tag. Refer to FIG. 13. In FIG. 13, for example, a location management function network element is an LMF network element, and an access and mobility management function network element is an AMF network element. The locating procedure may include but is not limited to the following steps.

S204-1: The LMF network element sends sixth indication information to the access and mobility management function network element, where the sixth indication information indicates each second receiver of the second tag to measure an uplink signal of the second tag.

The sixth indication information is obtained based on the fifth indication information. For example, the sixth indication information may be the fifth indication information, for example, fifth indication information similar to that in the foregoing Manner (1) to Manner (3). For another example, the sixth indication information is obtained through conversion based on the fifth indication information.

S204-2: The access and mobility management function network element receives the sixth indication information, and obtains, based on the sixth indication information, the second measurement information obtained by each second receiver through measurement.

S204-3: The access and mobility management function network element sends the second measurement information obtained by each second receiver through measurement to the LMF network element.

It can be learned that, according to the method, the LMF network element can obtain the second measurement information obtained by each second receiver through measurement.

That the access and mobility management function network element obtains, based on the sixth indication information, the second measurement information obtained by each second receiver through measurement in step S204-2 may include:

S204-2-1: The access and mobility management function network element forwards the sixth indication information to one or more second access network devices.

The second access network device is an access network device to which each second receiver belongs, that is, an access network device integrating or incorporating with the second receiver.

S204-2-2: The one or more second access network devices obtain, based on the sixth indication information, second measurement information obtained by a corresponding second receiver through measurement.

S204-2-3: The one or more second access network devices send the second measurement information obtained by the corresponding second receiver through measurement to the access and mobility management function network element.

The second tag may include the one or more second receivers, and each second receiver may receive the uplink signal sent by the second tag. Therefore, in step S204-2-1, the access and mobility management function network element may forward the sixth indication information to the one or more second access network devices, so that the one or more second receivers may measure the uplink signal to obtain one or more pieces of second measurement information. The second measurement information may include parameters such as an angle of arrival and a signal strength of the uplink signal.

In an optional implementation, for the access and mobility management function network element to correctly route the sixth indication information to the second access network device to which each second receiver belongs in step S204-2-1, in step S202, the first network element further needs to send seventh indication information to the LMF network element. The seventh indication information includes an identifier of the one or more second access network devices. Further, in step S204-1, the LMF network element further needs to send eighth indication information to the access and mobility management function network element. The eighth indication information indicates the access and mobility management function network element to route the sixth indication information to each second access network device. In this way, the access and mobility management function network element receives the eighth indication information from the LMF network element, to route the sixth indication information to each second access network device based on the identifier of the one or more second access network devices. The eighth indication information may be the same as the seventh indication information, or may be generated or converted based on the seventh indication information.

For a procedure in which the first network element sends the seventh indication information to the LMF network element, refer to the process of transmitting the first indication information in FIG. 10A and FIG. 10B. Optionally, the seventh indication information and the fifth indication information and/or the first indication information may be transmitted in a same message.

In step S204-2-2, that the one or more second access network devices obtain, based on the sixth indication information, the second measurement information obtained by the corresponding second receiver through measurement may be that each second access network device forwards the second indication information to the corresponding second receiver; and the second receiver may obtain the corresponding second measurement information through measurement and send the second measurement information to a corresponding second access network device.

Optionally, the access and mobility management function network element may send thirteenth indication information to each second access network device. The thirteenth indication information indicates each second access network device to forward the sixth indication information to the corresponding second receiver. The thirteenth indication information may be an indication, to trigger the second access network device to forward the sixth indication information to the corresponding second receiver. In this way, each second access network device receives the sixth indication information from the access and mobility management function network element, receives the thirteenth indication information from the access and mobility management function network element, and may send the sixth indication information to the corresponding second receiver. Therefore, each second receiver may obtain the corresponding second measurement information through measurement, and then send the information to the corresponding second access network device.

Optionally, the first indication information, the third indication information, the fifth indication information, and the seventh indication information that are sent by the first network element to the LMF network element may be in a same message, or may be in different messages. Similarly, the second indication information, the fourth indication information, the sixth indication information, and the eighth indication information that are sent by the LMF network element to the access and mobility management function network element may be in a same message, or may be in different messages. The sixth indication information and the thirteenth indication information that are sent by the access and mobility management function network element to each second access network device may be in a same message or a plurality of messages.

In the tag locating method 200, for a transmission process in which the LMF network element sends the location information of the first tag to the first network element in step S205, refer to the process of transmitting the first indication information in FIG. 10A and FIG. 10B. To be specific, the LMF network element sends the information to the AMF network element, the VGMLC network element, the HGMLC network element, and the NEF network element sequentially, and then to the first network element. Details are not described herein again.

3. The tag locating method 300.

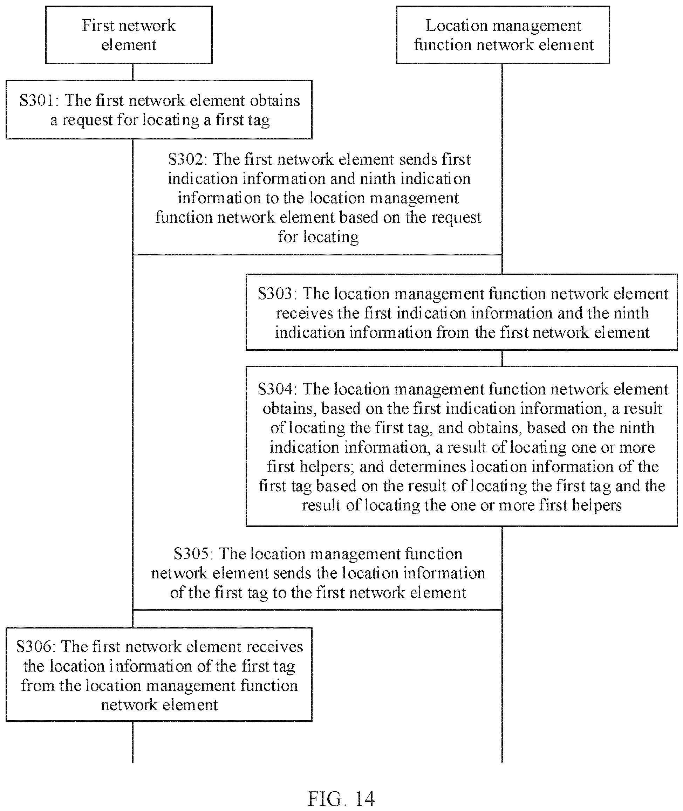

Refer to FIG. 14. FIG. 14 is a schematic flowchart of the tag locating method 300 according to an embodiment of this application. A difference between the tag locating method 300 shown in FIG. 14 and the tag locating method 100 shown in FIG. 8 lies in that, in the tag locating method 300, not only the location information of the tag can be obtained based on an architecture incorporating the cellular system and the passive or semi-active Internet of Things technology, to avoid extra costs due to repeated deployment of a locating system, and the location information of the first tag can also be determined based on the result of locating each first helper, to improve precision of locating the tag.

As shown in FIG. 14, the tag locating method 300 may include but is not limited to the following steps.

S301: A first network element obtains a request for locating a first tag.

Related descriptions of step S301 are the same as those of step S101. Details are not described herein again.

S302: The first network element sends first indication information and ninth indication information to a location management function network element based on the request for locating.

For a related parameter of the first indication information, refer to related content in the tag locating method 100. Details are not described herein again. Optionally, the first network element may initiate to locate each first helper based on a requirement on precision of locating related to the request for locating, that is, perform step S302.

The ninth indication information indicates the location management function network element to locate each first helper of the first tag. Optionally, the ninth indication information may be an indication, and the location management function network element may learn about, based on the indication, one or more first helpers that need to be located. Optionally, the ninth indication information may include an identifier of each first helper.

S303: The location management function network element receives the first indication information and the ninth indication information from the first network element.

S304. The location management function network element obtains, based on the first indication information, a result of locating the first tag, and obtains, based on the ninth indication information, a result of locating the one or more first helpers.

S305: The location management function network element determines location information of the first tag based on the result of locating the first tag and the result of locating the one or more first helpers.

S306: The LMF network element sends the location information of the first tag to the first network element.

Optionally, after obtaining the location information of the first tag, the first network element may directly or indirectly send the information to an application function network element, or store the location information of the first tag.

It can be learned that, in the tag locating method 300, the location information of the first tag can be determined based on the result of locating the one or more first helpers, to improve precision of locating the first tag.

Some possible implementations in the tag locating method 300 are described below.

In an optional implementation, when the first network element receives an identifier of the first tag carried in the request for locating, the first network element needs to obtain information, for example, the one or more first helpers and one or more first receivers of the first tag, so that the first network element can send the ninth indication information to the location management function network element. Specifically, for a procedure in which the first network element obtains information about the first tag, refer to FIG. 9. Details are not described herein again.

In the tag locating method 300, if there is the direct interface between the first network element and the location management function network element, the first network element may directly send the first indication information and the ninth indication information to the location management function network element. If there is no direct interface between the first network element and the location management function network element, for how the first network element sends the first indication information and the ninth indication information to the location management function network element, refer to a schematic flowchart of transmitting the first indication information shown in FIG. 10A and FIG. 10B. Optionally, the ninth indication information and the first indication information may be in a same message. To be specific, the location management function network element obtains the first indication information and the ninth indication information through steps S102-1 to S102-9.

Optionally, the ninth indication information may alternatively be separately transmitted through the procedure of transmitting the first indication information shown in FIG. 10A and FIG. 10B. To be specific, the first indication information is replaced with the ninth indication information. Details are not described herein again.

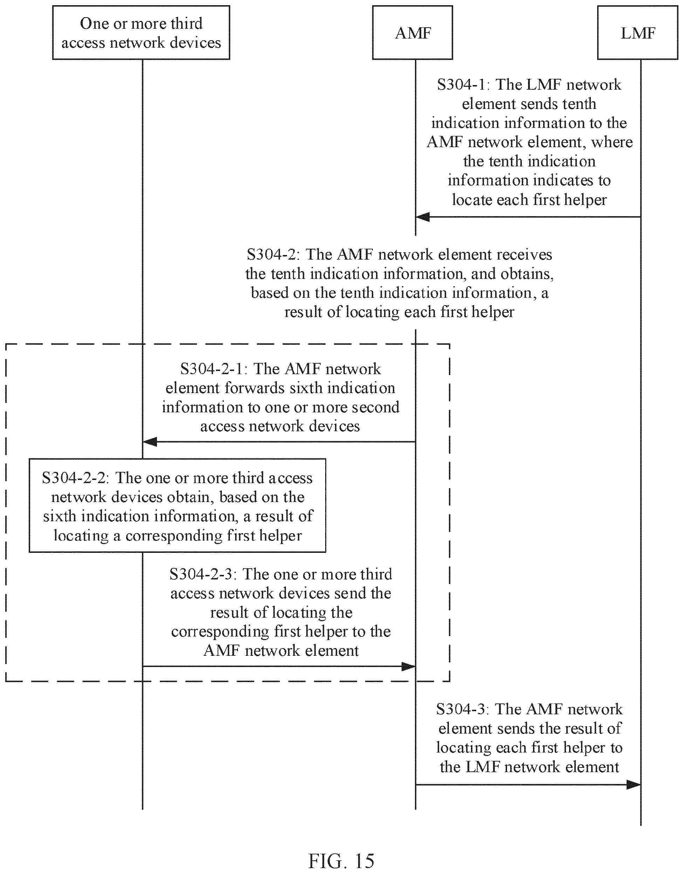

In an optional implementation, a process in which the location management function network element obtains, based on the ninth indication information, a result of locating each first helper in step S304 may be referred to as a procedure performed by the location management function network element for locating each first helper. Optionally, the locating procedure may also be referred to as a procedure of measuring the first helper. Refer to FIG. 15. In FIG. 15, for example, a location management function network element is an LMF network element, and an access and mobility management function network element is an AMF network element. The locating procedure may include but is not limited to the following steps.

S304-1: The LMF network element sends tenth indication information to the AMF network element, where the tenth indication information indicates a third access network device to which each first helper belongs to measure the result of locating the first helper.

The tenth indication information is obtained based on the ninth indication information. For example, the tenth indication information may be the ninth indication information, for example, ninth indication information similar to that in the foregoing Manner (1) to Manner (3). For another example, the tenth indication information is obtained through conversion based on the ninth indication information.

S304-2: The AMF network element receives the tenth indication information, and obtains, based on the tenth indication information, the result of locating each first helper.

S304-3: The AMF network element sends the result of locating each first helper to the LMF network element.

It can be learned that, in the method, the LMF network element can obtain the result of locating each first helper.

That the AMF network element obtains, based on the tenth indication information, the result of locating each first helper and second measurement information obtained through measurement in step S304-2 may include:

S304-2-1: The AMF network element forwards the tenth indication information to one or more third access network devices.

The third access network device is an access network device to which each first helper belongs, that is, an access network device integrating or incorporating with the first helper.

S304-2-2: The one or more third access network devices obtain, based on the tenth indication information, a result of locating a corresponding first helper.

S304-2-3: The one or more third access network devices send the result of locating the corresponding first helper to the access and mobility management function network element.

The first tag may include the one or more first helpers. Therefore, in step S304-2-1, the access and mobility management function network element may forward the tenth indication information to the one or more third access network devices, so that the one or more third access network devices may obtain the result of locating the corresponding first helper.

For a procedure in which the first network element sends the ninth indication information to the LMF network element, refer to a process of transmitting the first indication information in FIG. 10A and FIG. 10B. Optionally, the ninth indication information and the fifth indication information and/or the first indication information may be transmitted in a same message.

That the one or more third access network devices obtains, based on the tenth indication information, the result of locating the corresponding first helper in step S304-2-2 may be that the result of locating the first helper is obtained by using a network-assisted GNSS method, a downlink locating method, an eCID locating method, an uplink locating method, a barometric pressure sensor locating method, a WLAN locating method, a Bluetooth locating method, a terrestrial beacon system locating method, or the like. That is, a procedure of locating the first helper is similar to a procedure of locating user equipment. Details are not described herein again.

Optionally, the LMF network element is further configured to send eleventh indication information to the access and mobility management function network element. The eleventh indication information indicates the access and mobility management function network element to send locating notification and privacy acknowledgment request information to each first helper. The access and mobility management function network element receives the eleventh indication information from the LMF network element, sends, before obtaining, based on the tenth indication information, the locating notification and privacy acknowledgment request information to each first helper the result of locating each first helper, and then receives locating notification and privacy acknowledgment response information from each first helper. The access and mobility management function network element sends the locating notification and privacy acknowledgment response message of each first helper to the LMF network element. Therefore, this helps ensure security of location information of each first helper.

Optionally, the first indication information, the third indication information, and the ninth indication information that are sent by the first network element to the location management function network element may be in a same message, or may be in different messages. Similarly, the second indication information, the fourth indication information, the tenth indication information, and the eleventh indication information that are sent by the location management function network element to the access and mobility management function network element may be in a same message, or may be in different messages.

In an optional implementation, for a transmission process in which the location management function network element sends the location information of the first tag to the first network element in step S305, refer to the process of transmitting the first indication information in FIG. 10A and FIG. 10B. For example, the LMF network element sends the information to the AMF network element, the VGMLC network element, the HGMLC network element, and the NEF network element sequentially, and then to the first network element. Details are not described herein again.

4. The tag locating method 400.

In the tag locating method 400 provided in embodiments of this application, not only location information of a tag can be obtained based on an architecture incorporating a cellular system and a passive or semi-active Internet of Things technology, to avoid extra costs due to repeated deployment of a locating system, and location information of a first tag can also be determined based on a result of locating each first helper, a result of locating each second tag, and known location information of each second tag, to further greatly improve precision of locating the tag.

In an optional implementation, a first network element sends first indication information, fifth indication information, and ninth indication information to a location management function network element based on a request for locating. For related descriptions of the first indication information, refer to related content in the tag locating method 100. Details are not described herein again. For related descriptions of the fifth indication information, refer to related content in the tag locating method 200. Details are not described herein again. For related descriptions of the ninth indication information, refer to related content in the tag locating method 300. Details are not described herein again.

Optionally, the first indication information, the fifth indication information, and the ninth indication information may be in a same message, or may be in a plurality of messages separately.

The location management function network element receives the first indication information, the fifth indication information, and the ninth indication information from the first network element. The location management function network element obtains, based on the first indication information, a result of locating the first tag, obtains, based on the fifth indication information, a result of locating one or more second tags, and obtains, based on the ninth indication information, a result of locating one or more first helpers. The location management function network element determines, location information of the first tag based on the result of locating the first tag, the result of locating the one or more first helpers, the result of locating the one or more second tags, and known location information of the one or more second tags. The location management function network element sends the location information of the first tag to the first network element.

Optionally, after obtaining the location information of the first tag, the first network element may directly or indirectly send the information to an application function network element, or store the location information of the first tag.

It can be learned that the tag locating method 400 greatly improves precision of locating the first tag.

For a possible implementation of the tag locating method 400 below, refer to related content in the tag locating method 100, the tag locating method 200, and the tag locating method 300 respectively. Details are not described herein again.

In an optional implementation, in step S404, for that the location management function network element obtains, based on the first indication information, the result of locating the first tag, refer to related content described in FIG. 11; for that the location management function network element obtains, based on the fifth indication information, a result of locating each second tag, refer to related content described in FIG. 13; and for that the location management function network element obtains, based on the ninth indication information, a result of locating each first helper, refer to related content described in FIG. 15. Details are not described herein again.

In the tag locating method 400, for a transmission process in which the location management function network element sends the location information of the first tag to the first network element in step S405, refer to the transmission process of the first indication information in FIG. 10A and FIG. 10B. For example, the LMF network element sends the information to the AMF network element, the VGMLC network element, the HGMLC network element, and the NEF network element sequentially, and then to the first network element. Details are not described herein again.

5. A first network element may be an access and mobility management function network element or a network exposure function network element.

In this application, in an optional implementation, the first network element may be integrated into an access and mobility management function network element. To be specific, a related operation of the first network element in this application may be performed by the access and mobility management function network element. The access and mobility management function network element sends a request for locating a first tag to a location management function network element. If locating is implemented according to a commercial location procedure defined in a standard, a request for locating needs to be triggered by a network exposure function network element in a unified manner. For example, the AMF network element shown in FIG. 10A and FIG. 10B needs to send first indication information to the network exposure function network element, and does not select an LMF network element until step S102-7, that is, until a request message from a VGMLC network element is received, to trigger locating. To be specific, in the commercial location procedure, that the network exposure function network element needs to trigger the request for locating in a unified manner specifically means that the network exposure function network element determines, based on a requirement on precision of locating in the request for locating, whether to obtain location information (a cell and other information) at coarse granularity, or obtain location information (obtained by the location management function network element according to a locating algorithm) at fine granularity.

If a regulatory location procedure defined in a standard can be extended, locating may be triggered by the access and mobility management function, and corresponding steps S102-1 to S102-7 shown in FIG. 10A and FIG. 10B may be omitted. Correspondingly, in the foregoing methods, the access and mobility management function network element may directly obtain the location information of the first tag from the LMF network element, and does not need to obtain the information indirectly by using the VGMLC network element, the HGMLC network element, and the NEF network element. That is, the regulatory location procedure may be directly triggered by a network element in a core network, and does not need to be triggered by the network exposure function network element in a unified manner. For example, this implementation may be triggered by the access and mobility management function network element.

In another optional implementation, the first network element may be integrated into a network exposure function network element. To be specific, a related operation of the first network element in this application may be performed by the network exposure function network element, and locating is triggered by the network exposure function network element. Alternatively, the first network element may be another network function network element. This is not limited in this application.

Corresponding to the methods provided in the foregoing method embodiments, an embodiment of this application further provides a corresponding apparatus, including a corresponding module configured to perform the foregoing embodiments. The module may be software, hardware, or a combination of software and hardware.

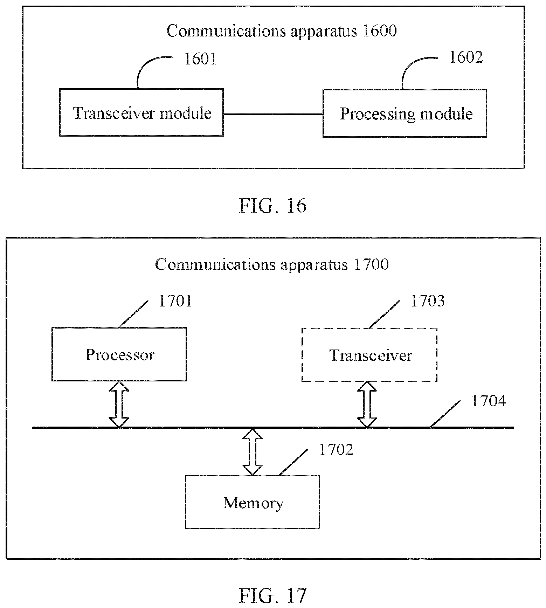

FIG. 16 is a schematic diagram of a structure of a communications apparatus according to this application. A communications apparatus 1600 shown in FIG. 16 includes a transceiver module 1601 and a processing module 1602.

In a design, the apparatus 1600 is a location management function network element.

For example, the transceiver module 1601 is configured to receive first indication information from a first network element, where the first indication information indicates the location management function network element to locate a first tag, and both the location management function network element and the first network element are network elements in a core network; and the processing module 1602 is configured to: obtain, based on the first indication information, a result of locating the first tag, and determine location information of the first tag based on the result of locating the first tag. The transceiver module 1601 is configured to send the location information of the first tag to the first network element.

When the apparatus 1600 is the location management function network element, the apparatus is configured to implement a function of the location management function network element in the embodiments shown in FIG. 8 to FIG. 15.

In a design, the apparatus 1600 is a first network element.

For example, the processing module 1602 is configured to obtain a request for locating a first tag; and the transceiver module 1601 is configured to send first indication information to a location management function network element based on the request for locating, where the first indication information indicates the location management function network element to locate the first tag, and the location management function network element is a network element in a core network. The processing module 1602 is configured to obtain location information of the first tag from the location management function network element, where the location information of the first tag is determined based on a result of locating the first tag, that is, the location information of the first tag is determined based on first measurement information of the first tag.

When the apparatus 1600 is the first network element, the apparatus is configured to implement a function of the first network element in the embodiments shown in FIG. 8 to FIG. 15.

In a design, the apparatus 1600 is an access and mobility management function network element.

For example, the transceiver module 1601 is configured to receive second indication information from a location management function network element, where the second indication information indicates each first receiver of a first tag to measure an uplink signal of the first tag, the second indication information is obtained based on first indication information, the first indication information indicates the location management function network element to locate the first tag, and the location management function network element is a network element in a core network. In this way, after the processing module 1602 is configured to obtain first measurement information obtained by each first receiver through measurement, the transceiver module 1601 may be further configured to send the first measurement information obtained by each first receiver through measurement to the location management function network element; and the first measurement information obtained by each first receiver through measurement is used to determine location information of the first tag.

When the apparatus 1600 is the access and mobility management function network element, the apparatus is configured to implement a function of the access and mobility management function network element in the embodiments shown in FIG. 8 to FIG. 15.

In a design, the apparatus 1600 is a first access network device.

For example, the transceiver module 1601 is configured to receive second indication information from an access and mobility management function network element, where the second indication information indicates the first access network device to use a first receiver to measure an uplink signal of a first tag, and the first receiver used by the first access network device is a receiver of the first tag; and the processing module 1602 is configured to determine, based on the second indication information, a result of locating the first tag. Further, the transceiver module 1601 is further configured to send the result of locating the first tag to the access and mobility management function network element.

When the apparatus 1600 is the first access network device, the apparatus is configured to implement a function of the first access network device in the embodiments shown in FIG. 8 to FIG. 15.

Optionally, when the apparatus 1600 is a second access network device, the apparatus may be configured to implement a function of the second access network device in the embodiments shown in FIG. 8 to FIG. 15.

Optionally, when the apparatus 1600 is a third access network device, the apparatus may be configured to implement a function of the third access network device in the embodiments shown in FIG. 8 to FIG. 15.

FIG. 17 is a schematic diagram of a structure of another communications apparatus according to this application. A communications apparatus 1700 shown in FIG. 17 includes at least one processor 1701 and a memory 1702, and may optionally further include a transceiver 1703. A specific connection medium between the processor 1701 and the memory 1702 is not limited in this embodiment of this application. In FIG. 17, for example, the memory 1702 and the processor 1701 are connected through a bus 1704. The bus 1704 is represented by a thick line in the figure. A manner of connecting other components is merely an example for description, and is not limited thereto. The bus 1704 may be classified into an address bus, a data bus, a control bus, and the like. For ease of representation, only one thick line is used for representation in FIG. 17, but this does not mean that there is only one bus or only one type of buses.

The processor 1701 may have a data transceiver function, and can communicate with another device. In the apparatus shown in FIG. 17, an independent data transceiver module, for example, the transceiver 1703, may also be disposed for sending/receiving data. When communicating with the another device, the processor 1701 may perform data transmission by using the transceiver 1703.

In an example, when a location management function network element is in a form shown in FIG. 17, the processor 1701 in FIG. 17 may invoke computer-executable instructions stored in the memory 1702, so that the location management function network element can perform a method performed by the location management function network element in any one of the embodiments in FIG. 7 to FIG. 10A and FIG. 10B.

In an example, when a first network element is in a form shown in FIG. 17, the processor 1701 in FIG. 17 may invoke the computer-executable instructions stored in the memory 1702, so that the first network element can perform a method performed by the first network element in any one of the embodiments in FIG. 8 to FIG. 15.

In an example, when an access and mobility management function network element is in a form shown in FIG. 17, the processor 1701 in FIG. 17 may invoke the computer-executable instructions stored in the memory 1702, so that the access and mobility management function network element can perform methods performed by the access and mobility management function network element in the embodiments in FIG. 8 to FIG. 15.

In an example, when a first access network device is in a form shown in FIG. 17, the processor 1701 in FIG. 17 may invoke the computer-executable instructions stored in the memory 1702, so that the first access network device can perform a method performed by the first access network device in the embodiments in FIG. 8 to FIG. 15.

Specifically, functions/implementation processes of a processing module and a transceiver module in FIG. 17 may be implemented by the processor 1701 in FIG. 17 by invoking the computer-executable instructions stored in the memory 1702. Alternatively, the functions/implementation processes of the processing module in FIG. 7 may be implemented by the processor 1701 in FIG. 17 by invoking the computer-executable instructions stored in the memory 1702; and the functions/implementation processes of the transceiver module in FIG. 7 may be implemented by the transceiver 1703 in FIG. 17.

An embodiment of this application further provides a tag locating system. The system may include the location management function network element or the LMF and the access and mobility management network element or the AMF in FIG. 8 to FIG. 15. Optionally, the first network element in FIG. 8 to FIG. 15 may be further included. Optionally, the access network device or the RAN in FIG. 8 to FIG. 15 may be further included.

The solutions described in this application may be implemented in various manners. For example, the technologies may be implemented by hardware or a combination of software and hardware. For a hardware implementation, a processing module configured to execute these technologies in a communications apparatus (for example, a base station, a terminal, a network entity, a core network element, or a chip) may be implemented in one or more general-purpose processors, digital signal processors (digital signal processor, DSP), digital signal processing components, or application-specific integrated circuits (application-specific integrated circuit, ASIC), programmable logic devices, field programmable gate arrays (field programmable gate array, FPGA), or other programmable logic apparatuses, discrete gates or transistor logics, discrete hardware components, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, for example, a digital signal processor and a microprocessor, a plurality of microprocessors, one or more microprocessors in combination with a digital signal processor core, or any other similar configurations.

It can be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through examples but not limitative descriptions, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory in the system and method described in this specification is intended to include, but is not limited to, these and any memory of another appropriate type.

This application further provides a computer-readable medium, storing instructions, and when the instructions are executed by a computer, a function in any one of the foregoing method embodiments is implemented.

This application further provides a computer program product. When the computer program product is executed by a computer, a function in any one of the foregoing method embodiments is implemented.

Some or all the foregoing embodiments may be implemented by using software, hardware, firmware, or any combination thereof. When software is used for implementation, some or all embodiments may be implemented in a form of a computer program product. The computer program product includes one or more computer instructions. When the computer instruction is loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, by using a coaxial cable, an optical fiber, or a digital subscriber line (digital subscriber line, DSL)) or wireless (for example, via infrared, radio, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It can be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on requirements. Correspondingly, the apparatus provided in embodiments of this application may also correspondingly implement these features or functions. Details are not described herein.

A person skilled in the art may further understand that various illustrative logical blocks (illustrative logical block) and steps (step) that are listed in embodiments of this application may be implemented by electronic hardware, computer software, or a combination thereof. Whether such a function is implemented by hardware or software depends on particular application and a design requirement of an entire system. A person skilled in the art may use various methods to implement the function for corresponding application, but it should not be considered that the implementation goes beyond the protection scope of embodiments of this application.

It can be understood that an "embodiment" mentioned in this specification means that particular features, structures, or characteristics related to the embodiment are included in at least one embodiment of this application. Therefore, each embodiment in this specification does not necessarily mean a same embodiment. In addition, these particular features, structures, or characteristics may be combined in one or more embodiments in any appropriate manner. It can be understood that sequence numbers of the processes in the foregoing embodiments of this application do not mean a sequence for performing. The sequence for performing the processes should be determined based on functions and internal logic of the processes, and should not constitute any limitation on implementation processes of embodiments of this application.

It can be understood that, in this application, "when" and "if" mean that an apparatus performs corresponding processing in an objective situation, and are not intended to limit time. The terms do not mean that the apparatus is required to have a determining action during an implementation, and do not mean any other limitation.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" in this specification may be used interchangeably in this specification. The term "and/or" in this specification describes only an association relationship for describing associated objects and represents that three relationships may exist. For example, A and/or B may represent the following three cases: Only A exists, both A and B exist, and only B exists. A may be single or plural, and B may be single or plural.

"Pre-define" in this application may be understood as "define", "pre-define", "store", "pre-store", "pre-negotiate", "pre-configure", "solidity", or "pre-burn".

It can be understood by a person of ordinary skills in the art that, for convenient and brief description, for a detailed working process of the foregoing system, apparatus, and unit, refer to a corresponding process in the foregoing method embodiments. Details are not described herein again.

For same or similar parts in embodiments of this application, refer to each other. In embodiments of this application and implementations/implementation methods/achieving methods in each embodiment, unless otherwise specified or there is a logical conflict, terms and/or descriptions in different embodiments and implementations/implementation methods/achieving methods in each embodiment are consistent and may be mutual references. Technical features in different embodiments and implementations/implementation methods/achieving methods in each embodiment may be combined to form a new embodiment, an implementation, an implementation method, or an achieving method according to an internal logical relationship between the different embodiments. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A tag locating method, wherein the method comprises:
receiving, by a location management function network element, first indication information from a first network element, wherein the first indication information indicates the location management function network element to locate a first tag, and both the location management function network element and the first network element are network elements in a core network;
obtaining, by the location management function network element based on the first indication information, a result of locating the first tag, and determining location information of the first tag based on the result of locating the first tag; and
sending, by the location management function network element, the location information of the first tag to the first network element.

2. The method according to claim 1, wherein
the first indication information comprises an identifier of the first tag.

3. The method according to claim 1 or 2, wherein the obtaining, by the location management function network element based on the first indication information, a result of locating the first tag comprises:
sending, by the location management function network element, second indication information to an access and mobility management function network element, wherein the second indication information indicates each first receiver of the first tag to measure an uplink signal of the first tag, and the second indication information is obtained based on the first indication information; and
obtaining, by the location management function network element from the access and mobility management function network element, first measurement information obtained by each first receiver through measurement.

4. The method according to claim 3, wherein before the obtaining, by the location management function network element from the access and mobility management function network element, first measurement information measured by each first receiver, the method further comprises:
receiving, by the location management function network element, third indication information from the first network element, wherein the third indication information comprises an identifier of one or more first access network devices, and the first access network device is an access network device to which a corresponding first receiver belongs; and
sending, by the location management function network element, fourth indication information to the access and mobility management function network element, wherein the fourth indication information indicates the access and mobility management function network element to route the second indication information to each first access network device, and the fourth indication information is obtained based on the third indication information.

5. The method according to any one of claims 1 to 4, wherein the method further comprises:
receiving, by the location management function network element, fifth indication information from the first network element, wherein the fifth indication information indicates the location management function network element to locate one or more second tags; and
obtaining, by the location management function network element based on the fifth indication information, a result of locating the one or more second tags, wherein
the determining location information of the first tag based on the result of locating the first tag comprises:
determining, by the location management function network element, the location information of the first tag based on the result of locating the first tag, the result of locating the one or more second tags, and known location information of the one or more second tags.

6. The method according to claim 5, wherein
the fifth indication information comprises an identifier of each second tag, or comprises an identifier of each second tag and known location information of each second tag.

7. The method according to claim 5 or 6, wherein the method further comprises:
sending, by the location management function network element, sixth indication information to the access and mobility management function network element, wherein the sixth indication information indicates a second receiver of each second tag to measure an uplink signal of the second tag, and the sixth indication information is obtained based on the fifth indication information; and
the obtaining, by the location management function network element, a result of locating the one or more second tags comprises:
obtaining, by the location management function network element from the access and mobility management function network element, second measurement information obtained by each second receiver through measurement.

8. The method according to claim 7, wherein before the obtaining, by the location management function network element from the access and mobility management function network element, second measurement information measured by each second receiver, the method further comprises:
receiving, by the location management function network element, seventh indication information from the first network element, wherein the seventh indication information comprises an identifier of one or more second access network devices, and the second access network device is an access network device to which a corresponding second receiver belongs; and
sending, by the location management function network element, eighth indication information to the access and mobility management function network element, wherein the eighth indication information indicates the access and mobility management function network element to route the sixth indication information to each second access network device, and the eighth indication information is obtained based on the seventh indication information.

9. The method according to any one of claims 1 to 8, wherein the method further comprises:
receiving, by the location management function network element, ninth indication information from the first network element, wherein the ninth indication information indicates the location management function network element to locate each first helper of the first tag; and
obtaining, by the location management function network element, a result of locating each first helper, wherein
the determining, by the location management function network element, location information of the first tag based on the result of locating the first tag comprises:
determining, by the location management function network element, the location information of the first tag based on the result of locating the first tag and the result of locating each first helper; or
the determining, by the location management function network element, location information of the first tag based on the result of locating the first tag comprises:
determining, by the location management function network element, the location information of the first tag based on the result of locating the first tag, the result of locating each first helper, the result of locating the one or more second tags, and the known location information of the one or more second tags.

10. The method according to claim 9, wherein
the ninth indication information comprises an identifier of each first helper.

11. The method according to claim 9 or 10, wherein the method further comprises:
sending, by the location management function network element, tenth indication information to the access and mobility management function network element, wherein the tenth indication information indicates a third access network device to which each first helper belongs to measure a result of locating the first helper, and the tenth indication information is obtained based on the ninth indication information; and
the obtaining, by the location management function network element, a result of locating each first helper comprises:
obtaining, by the location management function network element from the access and mobility management function network element, the result, measured by each third access network device, of locating each first helper.

12. The method according to claim 11, wherein before the sending, by the location management function network element, tenth indication information to the access and mobility management function network element, the method further comprises:
sending, by the location management function network element, eleventh indication information to the access and mobility management function network element, wherein the eleventh indication information indicates the access and mobility management function network element to send locating notification and privacy acknowledgment request information to each first helper; and
obtaining, by the location management function network element from the access and mobility management function network element, a locating notification and privacy acknowledgment response message of each first helper.

13. A tag locating method, wherein the method comprises:
obtaining, by a first network element, a request for locating a first tag;
sending, by the first network element based on the request for locating, first indication information to a location management function network element, wherein the first indication information indicates the location management function network element to locate the first tag, and the location management function network element is a network element in a core network; and
obtaining, by the first network element, location information of the first tag from the location management function network element, wherein
the location information of the first tag is determined based on a result of locating the first tag.

14. The method according to claim 13, wherein
the first indication information comprises an identifier of the first tag.

15. The method according to claim 13 or 14, wherein the method further comprises:
sending, by the first network element, third indication information to the location management function network element, wherein the third indication information comprises an identifier of one or more first access network devices, and the first access network device is an access network device to which a first receiver belongs, wherein
the third indication information is used by an access and mobility management function network element to route second indication information to each first access network device; and
the second indication information is obtained based on the first indication information, the second indication information indicates each first receiver to measure an uplink signal of the first tag, and the result of locating the first tag comprises first measurement information measured by each first receiver.

16. The method according to any one of claims 13 to 15, wherein the method further comprises:
sending, by the first network element, fifth indication information to the location management function network element, wherein the fifth indication information indicates the location management function network element to locate one or more second tags, wherein
the location information of the first tag is determined based on the result of locating the first tag, a result of locating the one or more second tags, and known location information of the one or more second tags.

17. The method according to claim 16, wherein
the fifth indication information comprises an identifier of the one or more second tags, or comprises an identifier of the one or more second tags and the known location information of the one or more second tags.

18. The method according to any one of claims 16 and 17, wherein the method further comprises:
sending, by the first network element, seventh indication information to the location management function network element, wherein the seventh indication information comprises an identifier of one or more second access network devices, and the second access network device is an access network device to which a second receiver of the second tag belongs, wherein
the seventh indication information is used by the access and mobility management function network element to route sixth indication information to each second access network device; and
the sixth indication information is obtained based on the fifth indication information, the sixth indication information indicates each second receiver to measure an uplink signal of a corresponding second tag, and a result of locating each second tag comprises second measurement information obtained by each corresponding second receiver through measurement.

19. The method according to any one of claims 13 to 18, wherein the method further comprises:
sending, by the first network element, ninth indication information to the location management function network element, wherein the ninth indication information indicates the location management function network element to locate each first helper of the first tag, wherein
the location information of the first tag is determined based on the result of locating the first tag, a result of locating each first helper, the result of locating the one or more second tags, and the known location information of the one or more second tags, or the location information of the first tag is determined based on the result of locating the first tag and a result of locating each first helper.

20. The method according to claim 19, wherein
the ninth indication information comprises an identifier of each first helper.

21. The method according to any one of claims 13 to 15, wherein the method further comprises:
triggering, by the first network element, an inventory process for the first tag, to obtain an identifier of one or more first receivers of the first tag and an identifier of a first access network device to which each first receiver belongs.

22. The method according to any one of claims 16 to 18, wherein the method further comprises:
triggering, by the first network element, an inventory process for each second tag, to obtain an identifier of one or more second receivers of the second tag and an identifier of a second access network device to which each second receiver belongs.

23. The method according to any one of claims 13 to 22, wherein
the request for locating the first tag is triggered by an application function network element, or is triggered by one or more first helpers of the first tag.

24. The method according to any one of claims 13 to 23, wherein
the first network element is an access and mobility management function network element or a network exposure function network element.

25. A tag locating method, wherein the method comprises:
receiving, by an access and mobility management function network element, second indication information from a location management function network element, wherein the second indication information indicates each first receiver of a first tag to measure an uplink signal of the first tag, the second indication information is obtained based on first indication information, the first indication information indicates the location management function network element to locate the first tag, and the location management function network element is a network element in a core network;
obtaining, by the access and mobility management function network element, first measurement information obtained by each first receiver through measurement;
sending, by the access and mobility management function network element, the first measurement information obtained by each first receiver through measurement to the location management function network element; and
the first measurement information obtained by each first receiver through measurement is used to determine location information of the first tag.

26. The method according to claim 25, wherein the obtaining, by the access and mobility management function network element, first measurement information obtained by each first receiver through measurement comprises:
sending, by the access and mobility management function network element, the second indication information to each first access network device, wherein the first access network device is an access network device to which the first receiver belongs; and
receiving, by the access and mobility management function network element, first measurement information obtained by a corresponding first receiver in each first access network device through measurement.

27. The method according to claim 26, wherein the sending, by the access and mobility management function network element, the second indication information to each first access network device comprises:
receiving, by the access and mobility management function network element, fourth indication information from the location management function network element, wherein the fourth indication information indicates the access and mobility management function network element to route the second indication information to each first access network device, the fourth indication information is obtained based on third indication information, and the third indication information comprises an identifier of each first access network device; and
routing, by the access and mobility management function network element based on the fourth indication information, the second indication information to each first access network device.

28. The method according to claim 26 or 27, wherein the method further comprises:
sending, by the access and mobility management function network element, twelfth indication information to each first access network device, wherein the twelfth indication information indicates each first access network device to forward the second indication information to a corresponding first receiver.

29. The method according to any one of claims 25 to 28, wherein the method further comprises:
receiving, by the access and mobility management function network element, sixth indication information from the location management function network element, wherein the sixth indication information indicates a second receiver of each second tag to measure an uplink signal of the second tag, the sixth indication information is obtained based on fifth indication information, and the fifth indication information indicates the location management function network element to locate one or more second tags;
obtaining, by the access and mobility management function network element based on the sixth indication information, second measurement information obtained by each second receiver through measurement; and
sending, by the access and mobility management function network element to the location management function network element, the second measurement information obtained by each second receiver through measurement, wherein
the first measurement information obtained by each first receiver through measurement and the second measurement information obtained by each second receiver through measurement are used to determine the location information of the first tag.

30. The method according to claim 29, wherein the obtaining, by the access and mobility management function network element based on the sixth indication information, second measurement information obtained by each second receiver through measurement comprises:
sending, by the access and mobility management function network element, the sixth indication information to each second access network device, wherein the second access network device is an access network device to which the second receiver belongs; and
receiving, by the access and mobility management function network element, second measurement information obtained by a corresponding second receiver in each second access network device through measurement.

31. The method according to claim 30, wherein the sending, by the access and mobility management function network element, the sixth indication information to each second access network device comprises:
receiving, by the access and mobility management function network element, eighth indication information from the location management function network element, wherein the eighth indication information indicates the access and mobility management function network element to route the sixth indication information to each second access network device, the eighth indication information is obtained based on seventh indication information, and the seventh indication information comprises an identifier of one or more second access network devices; and
routing, by the access and mobility management function network element based on the eighth indication information, the sixth indication information to each second access network device.

32. The method according to claim 30 or 31, wherein the method further comprises:
sending, by the access and mobility management function network element, thirteenth indication information to each second access network device, wherein the thirteenth indication information indicates each second access network device to forward the sixth indication information to a corresponding second receiver.

33. The method according to any one of claims 25 to 32, wherein the method further comprises:
receiving, by the access and mobility management function network element, tenth indication information from the location management function network element, wherein the tenth indication information indicates a third access network device to which each first helper belongs to measure a result of locating the first helper, the tenth indication information is obtained based on ninth indication information, and the ninth indication information indicates the location management function network element to locate each first helper of the first tag;
obtaining, by the access and mobility management function network element based on the tenth indication information, a result of locating each first helper; and
sending, by the access and mobility management function network element, the result of locating each first helper to the location management function network element, wherein
the first measurement information obtained by each first receiver through measurement and the result of locating each first helper are used to determine the location information of the first tag, or the first measurement information obtained by each first receiver through measurement, the second measurement information obtained by each second receiver through measurement, and the result of locating each first helper are used to determine the location information of the first tag.

34. The method according to claim 33, wherein the obtaining, by the access and mobility management function network element based on the tenth indication information, a result of locating each first helper comprises:
sending, by the access and mobility management function network element, the tenth indication information to each third access network device, wherein the third access network device is an access network device to which the first helper belongs; and
obtaining, by the access and mobility management function network element, the result of locating each first helper from each third access network device.

35. The method according to claim 33 or 34, wherein before the obtaining, based on the tenth indication information, a result of locating each first helper, the method further comprises:
receiving, by the access and mobility management function network element, eleventh indication information from the location management function network element, wherein the eleventh indication information indicates the access and mobility management function network element to send locating notification and privacy acknowledgment request information to each first helper;
sending, by the access and mobility management function network element, the locating notification and privacy acknowledgment request information to each first helper;
receiving, by the access and mobility management function network element, locating notification and privacy acknowledgment response information from each first helper; and
sending, by the access and mobility management function network element, the locating notification and privacy acknowledgment response message of each first helper to the location management function network element.

36. A tag locating method, applied to a first access network device, wherein the method comprises:
receiving, by the first access network device, second indication information from an access and mobility management function network element, wherein the second indication information indicates the first access network device to use a first receiver to measure an uplink signal of a first tag, and the first receiver used by the first access network device is a receiver of the first tag;
determining, by the first access network device based on the second indication information, a result of locating the first tag; and
sending, by the first access network device, the result of locating the first tag to the access and mobility management function network element.

37. The method according to claim 36, wherein the determining, by the first access network device based on the second indication information, a result of locating the first tag comprises:
receiving, by the first access network device, twelfth indication information from the access and mobility management function, wherein the twelfth indication information indicates the first access network device to forward the second indication information to a corresponding first receiver;
forwarding, by the first access network device, the second indication information to the corresponding first receiver; and
obtaining, by the first access network device, measurement information of the first tag from the first receiver, wherein the result of locating the first tag comprises the measurement information of the first tag.

38. A communications apparatus, wherein the apparatus comprises a processing module and a transceiver module, and the processing module and the transceiver module are configured to enable the apparatus to perform the method according to any one of claims 1 to 12.

39. A communications apparatus, wherein the apparatus comprises a processing module and a transceiver module, and the processing module and the transceiver module are configured to enable the apparatus to perform the method according to any one of claims 13 to 24.

40. A communications apparatus, wherein the apparatus comprises a processing module and a transceiver module, and the processing module and the transceiver module are configured to enable the apparatus to perform the method according to any one of claims 25 to 35.

41. A communications apparatus, wherein the apparatus comprises a processing module and a transceiver module, and the processing module and the transceiver module are configured to enable the apparatus to perform the method according to claim 36 or 37.

42. A communications apparatus, wherein the apparatus comprises a processor, the processor is coupled to a memory, the memory is configured to store a program, and when the program is executed by the processor, the apparatus is enabled to perform the method according to any one of claims 1 to 12.

43. A communications apparatus, wherein the apparatus comprises a processor, the processor is coupled to a memory, the memory is configured to store a program, and when the program is executed by the processor, the apparatus is enabled to perform the method according to any one of claims 13 to 24.

44. A communications apparatus, wherein the apparatus comprises a processor, the processor is coupled to a memory, the memory is configured to store a program, and when the program is executed by the processor, the apparatus is enabled to perform the method according to any one of claims 25 to 35.

45. A communications apparatus, wherein the apparatus comprises a processor, the processor is coupled to a memory, the memory is configured to store a program, and when the program is executed by the processor, the apparatus is enabled to perform the method according to claim 36 or 37.

46. A communications system, wherein the communications system comprises:
a communications apparatus according to claim 38, a communications apparatus according to claim 40, and a communications apparatus according to claim 41.

47. The communications system according to claim 46, wherein the communications system further comprises:
a communications apparatus according to claim 39.

48. A computer-readable storage medium, storing instructions, and when the instructions are executed, a computer is enabled to perform the method according to any one of claims 1 to 12, the apparatus is enabled to perform the method according to any one of claims 13 to 24, the apparatus is enabled to perform the method according to any one of claims 25 to 35, or the apparatus is enabled to perform the method according to claim 36 or 37.

49. A computer program product comprising instructions, wherein when the computer program product is run on a computer, the method according to any one of claims 1 to 12 is implemented, the method according to any one of claims 13 to 24 is implemented, the method according to any one of claims 25 to 35 is implemented, or the method according to claim 36 or 37 is implemented.
